# EUROPÄISCHE PATENTSCHRIFT

(11) **EP 2 752 316 B1**
(45) Veröffentlichungstag und Bekanntmachung des Hinweises auf die Patenterteilung: **14.02.2018**
(21) Anmeldenummer: 13161544.5
(22) Anmeldetag: 28.03.2013
(51) Int. Cl.: B60H 1/28

(54) **Wasserkasten für ein Kraftfahrzeug**
Water chamber for a motor vehicle
Réservoir d'eau pour un véhicule automobile

(43) Veröffentlichungstag der Anmeldung: 09.07.2014
(73) Patentinhaber: Weidplas GmbH, 8700 Küsnacht (CH)
(72) Erfinder: Wagner, Bernd, 75385 Bad Teinach-Zavelstein (DE)
(74) Vertreter: Rutz, Andrea

(56) Entgegenhaltungen:
- DE-B3-102004 051 198
- DE-C1- 3 936 852
- DE-C1- 19 923 193
- US-A1- 2006 064 991

## Beschreibung

Die Erfindung betrifft einen Wasserkasten sowie ein Kraftfahrzeug umfassend einen solchen Wasserkasten, wie z.B.in US2006064991 A1 offenbart. Die DE 10 2004 051 198B3 offenbart einen Wasserkasten, der eine Wasserabscheidekammer zum Abführen von Schwallwasser und eine dieser Kammer nachgelagerte Tropfenabscheidekammer aufweist. Der Wasserkasten bildet eine Frischluftzuführvorrichtung, bei welcher in der Tropfenabscheidekammer zur Tropfenabscheidung angesaugte Luft entlang einer Kurve umgelenkt wird. In der Tropfenabscheidekammer sind zwei Wasserabläufe vorgesehen. Da dieser Wasserkasten ein vergleichweise grosses Volumen aufweist, ist es vielfach schwierig, diesen im Kraftfahrzeug geeignet zu positionieren.

Der Erfindung liegt somit die Aufgabe zu Grunde, einen Wasserkasten zu schaffen, der ein vergleichweise kleineres Volumen sowie eine kompaktere und einfachere Bauweise aufweist sowie eine effiziente Abscheidung von Schwallwasser als auch eine effiziente Abscheidung von tropfenförmigem Wasser aus der durch den Wasserkasten hindurchströmenden Luft ermöglicht.

Zur Lösung der Aufgabe wird ein Wasserkasten vorgeschlagen, wie er in Anspruch 1 angegeben ist. Ausserdem wird in Anspruch 16 ein Kraftfahrzeug umfassend einen Wasserkasten gemäss Anspruch 1 angegeben. Orts- und Richtungsangaben wie oben, unten, vertikal, horizontal, nach oben und nach unten sind im Folgenden jeweils in Bezug auf den Wasserkasten, welcher auf bestimmungsgemässe Weise in ein Kraftfahrzeug eingebaut ist, zu verstehen.

Die vorliegende Erfindung stellt also einen Wasserkasten für ein Kraftfahrzeug zur Verfügung, welcher geeignet ist, Luft und Wasser, insbesondere in einem Innenraum des Wasserkastens und gegebenenfalls in einer Luftleitstruktur des Wasserkastens, wenigstens teilweise voneinander zu trennen, umfassend
einen Innenraum,
wenigstens eine Lufteinlassöffnung zum Zuführen von Luft in den Innenraum,
wenigstens eine Luftauslassöffnung zum Abführen von Luft aus dem Innenraum,
eine Bodenwandung und eine Seitenwandung, insbesondere eine an der Bodenwandung umlaufend befestigte sowie sich nach oben erstreckende Seitenwandung, wobei
   der Innenraum wenigstens von der Bodenwandung sowie der Seitenwandung begrenzt ist,
eine Luftleitstruktur mit wenigstens einer Lufteintrittsöffnung sowie wenigstens einer Luftaustrittsöffnung, wobei
   die wenigstens eine Lufteintrittsöffnung und die wenigstens eine Luftaustrittsöffnung mittels eines durch die Luftleitstruktur gebildeten Hohlraumes miteinander verbunden sind, wobei
   die wenigstens eine Lufteintrittsöffnung der Luftleitstruktur die wenigstens eine Lufteinlassöffnung des Wasserkastens bildet, wobei
   wenigstens ein Abschnitt der Luftleitstruktur im Innenraum angeordnet ist, wobei
   die wenigstens eine Luftaustrittsöffnung im Innenraum angeordnet ist, wobei
   die wenigstens eine Luftaustrittsöffnung zur Bodenwandung und / oder zur Seitenwandung hin gerichtet ist, wobei
   der wenigstens eine Abschnitt der Luftleitstruktur, welcher im Innenraum angeordnet ist, im Wesentlichen vollständig oder vollständig von der Bodenwandung und der Seitenwandung beabstandet ist, wobei
   die unterste Kante der wenigstens einen Luftaustrittsöffnung der Luftleitstruktur im Wesentlichen auf gleicher Höhe, insbesondere auf gleicher Höhe, oder unterhalb der untersten Kante der wenigstens einen Luftauslassöffnung des Wasserkastens angeordnet ist, wobei
   die Seitenwandung einen oberen Rand, insbesondere einen obersten Rand, aufweist, wobei
   die wenigstens eine Lufteinlassöffnung des Wasserkastens oberhalb oder innerhalb des oberen Randes, insbesondere des obersten Randes, angeordnet ist, und wobei
   in der Bodenwandung wenigstens eine Wasserauslassöffnung zum Abführen von Wasser aus dem Innenraum angeordnet ist.

Die vorliegende Erfindung betrifft einen Wasserkasten für ein Kraftfahrzeug. Der Wasserkasten ist geeignet, Luft und Wasser, insbesondere in einem Innenraum des Wasserkastens und gegebenenfalls in einer Luftleitstruktur des Wasserkastens, wenigstens teilweise voneinander zu trennen. Der Wasserkasten ist somit geeignet, in einem Innenraum des Wasserkastens enthaltenes Schwallwasser und im Innenraum enthaltene Luft wenigstens teilweise, bevorzugt im Wesentlichen vollständig, bevorzugter vollständig, voneinander zu trennen. Schwallwasser ist beispielsweise Regenwasser oder Wasser einer Kraftfahrzeugwaschanlage. Zusätzlich ist der Wasserkasten auch geeignet, aus der den Innenraum des Wasserkastens hindurchströmenden und Wasser, insbesondere tropfenförmiges Wasser, enthaltenden Luft wenigstens teilweise, bevorzugt im Wesentlichen vollständig, bevorzugter vollständig, das Wasser, insbesondere das tropfenförmige Wasser, abzuscheiden. Der Wasserkasten weist den genannten Innenraum sowie wenigstens eine Lufteinlassöffnung zum Zuführen von Luft in den Innenraum und wenigstens eine Luftauslassöffnung zum Abführen von Luft aus dem Innenraum auf. Das Schwallwasser sowie die mit Wasser, insbesondere tropfenförmigem Wasser, beladene Luft können über die Lufteinlassöffnung in den Innenraum hineinströmen. Im Innenraum enthaltene Luft verlässt wenigstens teilweise, bevorzugt im Wesentlichen vollständig, bevorzugter vollständig, den Innenraum über die Luftauslassöffnung. Der Wasserkasten weist zudem eine Bodenwandung und eine Seitenwandung, insbesondere eine an der Bodenwandung umlaufend befestigte sowie sich nach oben erstreckende Seitenwandung, auf, wobei der Innenraum des Wasserkastens wenigstens von der Bodenwandung sowie der Seitenwandung begrenzt ist. Somit wird der Innenraum beispielsweise gemeinsam von der Bodenwandung und der Seitenwandung begrenzt oder der Innenraum wird beispielsweise gemeinsam von der Bodenwandung, der Seitenwandung sowie wenigstens einer weiteren Wandung, wie beispielsweise der Deckenwandung, begrenzt. Der Wasserkasten weist zudem eine Luftleitstruktur mit wenigstens einer Lufteintrittsöffnung sowie wenigstens einer Luftaustrittsöffnung auf, wobei die Lufteintrittsöffnung und die Luftaustrittsöffnung mittels eines durch die Luftleitstruktur gebildeten Hohlraumes miteinander verbunden sind. Die Lufteintrittsöffnung der Luftleitstruktur bildet die Lufteinlassöffnung des Wasserkastens. Da die Lufteintrittsöffnung der Luftleitstruktur die Lufteinlassöffnung des Wasserkastens bildet, kann das Schwallwasser sowie die mit Wasser, insbesondere tropfenförmigem Wasser, beladene Luft über die Luftleitstruktur, insbesondere ausschliesslich über die Luftleitstruktur, in den Innenraum des Wasserkastens gelangen. Wenigstens ein Abschnitt der Luftleitstruktur ist im Innenraum angeordnet, wobei die Luftaustrittsöffnung der Luftleitstruktur im Innenraum angeordnet ist. Bei einer ersten bevorzugten Ausführungsform des Wasserkastens, bei welcher die Luftleitstruktur aus einem ersten Abschnitt umfassend die Lufteintrittsöffnung und einem zweiten Abschnitt umfassend die Luftaustrittsöffnung besteht, ist somit der zweite Abschnitt, und somit auch die Luftaustrittsöffnung, im Innenraum angeordnet und der erste Abschnitt, und somit auch die Lufteintrittsöffnung, ausserhalb des Innenraums angeordnet. Bei einer zweiten bevorzugten Ausführungsform des Wasserkastens ist die Luftleitstruktur vollständig im Innenraum angeordnet. Die wenigstens eine Luftaustrittsöffnung der Luftleitstruktur ist zur Bodenwandung und / oder der Seitenwandung hin gerichtet. Der wenigstens eine Abschnitt der Luftleitstruktur, welcher im Innenraum angeordnet ist, ist im Wesentlichen vollständig oder vollständig von der Bodenwandung und der Seitenwandung beabstandet. Des weiteren ist die unterste Kante der Luftaustrittsöffnung der Luftleitstruktur im Wesentlichen auf gleicher Höhe, insbesondere auf gleicher Höhe, wie die untersten Kante der Luftauslassöffnung des Wasserkastens angeordnet oder die unterste Kante der Luftaustrittsöffnung der Luftleitstruktur ist unterhalb der untersten Kante der Luftauslassöffnung des Wasserkastens angeordnet. Die Seitenwandung weist einen oberen Rand, insbesondere einen obersten Rand, auf. Die Lufteinlassöffnung des Wasserkastens, welche durch die Lufteintrittsöffnung der Luftleitstruktur gebildet ist, ist oberhalb oder innerhalb des oberen Randes, insbesondere des obersten Randes, der Seitenwandung angeordnet. Eine innerhalb des oberen Randes, insbesondere des obersten Randes, angeordnete Lufteinlassöffnung ist, mit anderen Worten ausgedrückt, eine Lufteinlassöffnung, welche innerhalb eines vom oberen Rand, insbesondere obersten Rand, begrenzten Teilbereiches des Innenraumes des Wasserkastens angeordnet ist. In der Bodenwandung ist wenigstens eine Wasserauslassöffnung zum Abführen von Wasser aus dem Innenraum angeordnet. Die Trennung von Schwallwasser und Luft im Innenraum erfolgt beispielsweise dadurch, dass das über die Lufteinlassöffnung in den Innenraum eingetretene Schwallwasser über die Wasserauslassöffnung aus dem Innenraum abgeschieden wird.

Wie bereits beschrieben, ist der wenigstens eine Abschnitt der Luftleitstruktur des erfindungsgemässen Wasserkastens, welcher im Innenraum angeordnet ist, im Wesentlichen vollständig oder vollständig von der Bodenwandung und der Seitenwandung beabstandet. Dies bedeutet, dass, mit anderen Worten ausgedrückt, zwischen dem gesamten wenigstens eine Abschnitt der Luftleitstruktur, welcher im Innenraum angeordnet ist, oder zwischen im Wesentlichen dem gesamten wenigstens einen Abschnitt der Luftleitstruktur, welcher im Innenraum angeordnet ist, und der Seitenwandung sowie der Bodenwandung der Innenraum des Wasserkastens angeordnet ist. Dies bewirkt den Vorteil, dass beim erfindungsgemässen Wasserkasten ein grösserer Freiheitsgrad für die Positionierung der Luftauslassöffnung vorhanden ist als bei Wasserkästen des Standes der Technik. Die wenigstens eine Luftauslassöffnung kann somit beispielsweise im Wesentlichen an einem beliebigen Ort in der Seitenwandung und / oder in Bodenwandung angeordnet sein.

Da der wenigstens eine Abschnitt der Luftleitstruktur, welcher im Innenraum angeordnet ist, im Wesentlichen vollständig oder vollständig von der Bodenwandung und der Seitenwandung beabstandet ist, kann, unabhängig von der Position der Luftauslassöffnung, die die Luftaustrittsöffnung der Luftleitstruktur verlassende Luft im Wesentlichen immer, insbesondere immer, zu einer in der Seitenwandung und / oder zu einer in einer an der Seitenwandung befestigen Deckenwandung, falls der Wasserkasten eine Deckenwandung aufweist, angeordneten Luftauslassöffnung gelangen. Der grössere Freiheitsgrad bei der Positionierung der Luftauslassöffnung bedingt wiederum den Vorteil, dass der erfindungsgemässe Wasserkasten in einem Innenraum, insbesondere in einem Motorraum, eines Kraftfahrzeuges freier positioniert werden kann als ein Wasserkasten des Standes der Technik. Der erfindungsgemässe Wasserkasten weist einerseits ein vergleichsweise kleineres Volumen auf als die Wasserkästen des Standes der Technik, und andererseits kann beim erfindungsgemässen Wasserkasten die Position der Luftauslassöffnung entsprechend der Position des Wasserkastens im Innenraum des Kraftfahrzeuges, insbesondere im Motorraum des Kraftfahrzeuge, derart gewählt werden, dass die durch die Luftauslassöffnung aus dem Innenraum austretende Luft direkt in einen gewünschten Bereich des Innenraums des Kraftfahrzeuges, insbesondere des Motorraumes oder Fahrgastraumes des Kraftfahrzeuges, geleitet werden kann.

Wie bereits beschrieben, ist beim erfindungsgemässen Wasserkasten die unterste Kante der Luftaustrittsöffnung der Luftleitstruktur im Wesentlichen auf gleicher Höhe, insbesondere auf gleicher Höhe, wie die untersten Kante der Luftauslassöffnung des Wasserkastens angeordnet oder die unterste Kante der Luftaustrittsöffnung der Luftleitstruktur ist unterhalb der untersten Kante der Luftauslassöffnung des Wasserkastens angeordnet. Dies bewirkt den Vorteil, dass Luft, welche über die Lufteinlassöffnung des Wasserkastens beziehungsweise über die Lufteintrittsöffnung der Luftleitstruktur in den Innenraum hineinströmt, und wieder über die Luftauslassöffnung des Wasserkastens aus dem Innenraum herausströmt, eine Umlenkung erfährt. Durch diese Umlenkung wird in der Luft enthaltenes Wasser, insbesondere tropfenförmiges Wasser, wenigstens teilweise, bevorzugt im Wesentlichen vollständig, bevorzugter vollständig, aus der durch den Innenraum hindurchströmenden Luft abgeschieden. Der wenigstens eine Abschnitt der Luftleitstruktur, welcher im Innenraum angeordnet ist, ist somit als Luftumlenkelement ausgebildet.

Nach einer Weiterbildung der Erfindung ist der obere Rand, insbesondere der oberste Rand, umlaufend ausgebildet, wobei die wenigstens eine Lufteinlassöffnung des Wasserkastens oberhalb oder innerhalb des umlaufenden, oberen Randes, insbesondere des umlaufenden, obersten Randes, angeordnet ist. Somit weist die Seitenwandung einen oberen, umlaufenden Rand, insbesondere einen obersten, umlaufenden Rand, auf, wobei die wenigstens eine Lufteinlassöffnung des Wasserkastens oberhalb oder innerhalb des umlaufenden, oberen Randes, insbesondere des umlaufenden, obersten Randes, angeordnet ist. Eine innerhalb des oberen, umlaufenden Randes, insbesondere des obersten, umlaufenden Randes, angeordnete Lufteinlassöffnung ist, mit anderen Worten ausgedrückt, eine Lufteinlassöffnung, welche innerhalb eines vom oberen, umlaufenden Rand, insbesondere obersten, umlaufenden Rand, begrenzten Teilbereiches des Innenraumes des Wasserkastens angeordnet ist.

Nach einer Weiterbildung der Erfindung weist der obere Rand, insbesondere der oberste Rand, eine oberste Kante, insbesondere eine oberste, umlaufende Kante, auf, wobei die wenigstens eine Lufteinlassöffnung innerhalb oder oberhalb der obersten Kante, insbesondere der umlaufenden, obersten Kante, angeordnet ist. Eine innerhalb der obersten Kante, insbesondere der umlaufenden, obersten Kante, angeordnete Lufteinlassöffnung ist, mit anderen Worten ausgedrückt, eine Lufteinlassöffnung, welche innerhalb einer von der obersten Kante, insbesondere der obersten, umlaufenden Kante, begrenzten Fläche angeordnet ist. Die genannte Fläche ist eine zweidimensionale Teilmenge des Innenraumes des Wasserkastens.

Nach einer Weiterbildung der Erfindung ist der obere Rand, insbesondere der oberste Rand, der Seitenwandung mit der Luftleitstruktur verbunden. Bei dieser Weiterbildung der Erfindung wird der Innenraum von der Bodenwandung und der Seitenwandung begrenzt. Bei dieser Weiterbildung der Erfindung ist zudem die Lufteinlassöffnung des Wasserkastens innerhalb oder oberhalb des oberen Randes, insbesondere des obersten Randes, der Seitenwandung angeordnet. Bei der Ausführungsform, bei welcher die Lufteinlassöffnung oberhalb des oberen Randes, insbesondere des obersten Randes, der Seitenwandung angeordnet ist, ist die Luftleitstruktur innerhalb des Innenraums sowie ausserhalb des Innenraums angeordnet. Bei der Ausführungsform, bei welcher die Lufteinlassöffnung innerhalb des oberen Randes, insbesondere des obersten Randes, der Seitenwandung angeordnet ist, ist die Luftleitstruktur vollständig im Innenraum angeordnet. Diese Weiterbildung der Erfindung bietet den Vorteil eines besonders strömungsgünstigen Lufteintritts in den Wasserkasten.

Nach einer Weiterbildung der Erfindung ist der obere Rand, insbesondere der oberste Rand, der Seitenwandung lösbar, insbesondere luftdicht lösbar, oder unlösbar, insbesondere luftdicht unlösbar, an der Luftleitstruktur befestigt. Eine lösbare, insbesondere luftdicht lösbare, Befestigung ist bevorzugt, da sich dadurch der Innenraum des Wasserkastens, insbesondere der Teilbereich des Innenraumes unterhalb der Luftleitstruktur, besser warten und insbesondere besser reinigen lässt. Zudem kann ein allfällig im Innenraum des Wasserkastens angeordneter Filter, insbesondere ein unterhalb der Luftleitstruktur angeordneter Filter, leichter gewartet und ausgetauscht werden.

Nach einer Weiterbildung der Erfindung weist der Wasserkasten zusätzlich eine Deckenwandung auf, welche am oberen Rand, insbesondere obersten Rand, der Seitenwandung befestigt ist, wobei der Innenraum wenigstens von der Bodenwandung, der Seitenwandung sowie der Deckenwandung gemeinsam begrenzt ist, wobei die Luftleitstruktur an der Deckenwandung befestigt ist und wobei die Lufteinlassöffnung innerhalb oder oberhalb der Deckenwandung angeordnet ist. Diese Weiterbildung der Erfindung erlaubt eine freiere Positionierung des Wasserkastens im Innenraum, insbesondere im Motorraum, eines Kraftfahrzeuges und / oder eine freiere Positionierung der Lufteinlassöffnung des Wasserkastens. Bei der Ausführungsform, bei welcher die Lufteinlassöffnung innerhalb der Deckenwandung angeordnet ist, ist die Luftleitstruktur vollständig im Innenraum angeordnet. Bei der Ausführungsform, bei welcher die Lufteinlassöffnung oberhalb der Deckenwandung angeordnet ist, erstreckt sich die Luftleitstruktur durch wenigstens einen Durchbruch in der Deckenwandung. Die Luftleitstruktur ist somit innerhalb des Innenraumes sowie ausserhalb des Innenraumes angeordnet. Die Luftleitstruktur ist beispielsweise lösbar, insbesondere luftdicht lösbar, oder unlösbar, insbesondere luftdicht unlösbar, an der Deckenwandung befestigt und / oder die Deckenwandung ist beispielsweise lösbar, insbesondere luftdicht lösbar, oder unlösbar, insbesondere luftdicht unlösbar, an der Seitenwandung befestigt. Eine lösbare, insbesondere luftdicht lösbare, Befestigung ist bevorzugt, da sich dadurch der Innenraum des Wasserkastens besser warten und insbesondere besser reinigen lässt. Zudem kann ein allfällig im Innenraum des Wasserkastens angeordneter Filter leichter gewartet und ausgetauscht werden.

Eine lösbare, insbesondere luftdicht lösbare, Befestigung im Rahmen der Erfindung ist beispielweise eine Rastverbindung. Eine unlösbare, insbesondere luftdicht unlösbare, Befestigung im Rahmen der Erfindung ist beispielsweise eine Klebeverbindung, eine Schweissverbindung oder eine unlösbare, insbesondere luftdicht unlösbare, Befestigung ist beispielsweise auch gegeben, falls ein erster Teil mit einem zweiten Teil einstückig miteinander verbunden sind oder falls die Befestigung zwischen einem ersten Teil und einem zweiten Teil mittels Aufschrumpfen hergestellt ist.

Nach einer Weiterbildung der Erfindung ist die Seitenwandung benachbart, insbesondere unmittelbar benachbart, zum wenigstens einen Abschnitt der Luftleitstruktur, welcher im Innenraum angeordnet ist. Diese Anordnung bewirkt den Vorteil, dass die Lufteinlassöffnung sowie die Luftauslassöffnung des erfindungsgemässen Wasserkastens vergleichweise näher relativ zueinander angeordnet sind als die Lufteinlassöffnung sowie die Luftauslassöffnung von Wasserkästen des Standes der Technik. Ein solcher erfindungsgemässer Wasserkasten weist ein geringeres Volumen auf und ist kompakter als Wasserkästen des Standes der Technik.

Nach einer Weiterbildung der Erfindung ist die Wasserauslassöffnung unterhalb der Luftaustrittsöffnung der Luftleitstruktur angeordnet. Dies erlaubt einen effizienten Abfluss von Wasser aus dem Innenraum.

Nach einer Weiterbildung der Erfindung sind die Wasserauslassöffnung sowie die Luftaustrittsöffnung der Luftleitstruktur auf einer gemeinsamen Achse angeordnet. Falls die Wasserauslassöffnung unterhalb der Luftaustrittsöffnung der Luftleitstruktur angeordnet ist und die Wasserauslassöffnung sowie die Luftaustrittsöffnung der Luftleitstruktur auf einer gemeinsamen Achse angeordnet sind, kann das durch die Luftaustrittsöffnung herausströmende Wasser direkt in die Wasserauslassöffnung fliessen.

Nach einer Weiterbildung der Erfindung weist der Wasserkasten eine einzige Lufteinlassöffnung auf. Somit bildet die Luftleitstruktur eine einzige Lufteintrittsöffnung, welche der einzigen Lufteinlassöffnung des Wasserkastens entspricht. Die in den Innenraum einströmende Luft strömt somit ausschliesslich über diese einzige Lufteinlassöffnung des Wasserkastens in den Innenraum. Dies erlaubt eine besonders kompakte Ausgestaltung des Wasserkastens.

Nach einer Weiterbildung der Erfindung ist die Lufteinlassöffnung im Wesentlichen mittig bezüglich der Seitenwandung, insbesondere der umlaufenden Seitenwandung, angeordnet. Dies erlaubt eine besonders kompakte Ausgestaltung des Wasserkastens.

Nach einer Weiterbildung der Erfindung ist die Luftaustrittsöffnung im Wesentlichen mittig bezüglich der Seitenwandung, insbesondere der umlaufenden Seitenwandung, angeordnet. Dies erlaubt eine besonders kompakte Ausgestaltung des Wasserkastens.

Nach einer Weiterbildung der Erfindung ist der wenigstens eine Abschnitt der Luftleitstruktur, welcher im Innenraum angeordnet ist, im Wesentlichen mittig bezüglich der Seitenwandung, insbesondere der umlaufenden Seitenwandung, angeordnet. Dies erlaubt eine besonders kompakte Ausgestaltung des Wasserkastens.

Nach einer Weiterbildung der Erfindung ist die Luftleitstruktur im Wesentlichen mittig bezüglich der Seitenwandung, insbesondere der umlaufenden Seitenwandung, angeordnet. Dies erlaubt eine besonders kompakte Ausgestaltung des Wasserkastens.

Nach einer Weiterbildung der Erfindung weist die Luftleitstruktur eine einzige Luftaustrittsöffnung auf. Dies erlaubt eine besonders kompakte Ausgestaltung des Wasserkastens.

Nach einer Weiterbildung der Erfindung weist der Wasserkasten wenigstens zwei Luftauslassöffnungen auf, welche voneinander beabstandet sind. Bevorzugt sind die wenigstens zwei Luftauslassöffnungen in der Seitenwandung und / oder in der Deckenwandung, bevorzugt in der Seitenwandung, angeordnet. Je mehr Luftauslassöffnungen der Wasserkasten aufweist, desto besser kann der Wasserkasten den vorgegebenen Bauraum in einem Innenraum eines Kraftfahrzeuges, insbesondere in einem Motorraum eines Kraftfahrzeuges, ausnützen.

Nach einer Weiterbildung der Erfindung ist die Luftaustrittsöffnung der Luftleitstruktur relativ zur Luftauslassöffnung des Wasserkastens derart angeordnet, dass die Strömungsrichtung der durch die Luftaustrittsöffnung der Luftleitstruktur in den Innenraum hineinströmenden Luft ungleich der Strömungsrichtung der durch die Luftauslassöffnung des Wasserkastens aus dem Innenraum herausströmenden Luft ist. Nach einer Weiterbildung der Erfindung ist die Luftaustrittsöffnung der Luftleitstruktur relativ zur Luftauslassöffnung des Wasserkastens derart angeordnet, dass die Strömungsrichtung der Luft, welche senkrecht zur Querschnittsfläche der Luftaustrittsöffnung der Luftleitstruktur aus der Luftaustrittsöffnung austritt, ungleich zur Strömungsrichtung der Luft welche senkrecht zur Querschnittsfläche der Luftauslassöffnung des Wasserkastens in die Luftauslassöffnung eintritt, ist. Nach einer Weiterbildung der Erfindung ist die Luftaustrittsöffnung der Luftleitstruktur relativ zur Luftauslassöffnung des Wasserkastens derart angeordnet, dass die Strömungsrichtung der Luft in der Luftaustrittsöffnung der Luftleitstruktur in einem Winkel von 90° bis 270°, bevorzugt in einem Winkel von 90° bis 180°, zur Strömungsrichtung der Luft in der Luftauslassöffnung des Wasserkastens ist. Nach einer Weiterbildung der Erfindung ist die Luftaustrittsöffnung der Luftleitstruktur relativ zur Luftauslassöffnung des Wasserkastens derart angeordnet, dass die Strömungsrichtung der Luft welche senkrecht zur Querschnittsfläche der Luftaustrittsöffnung aus der Luftaustrittsöffnung der Luftleitstruktur austritt in einem Winkel von 90° bis 270°, bevorzugt in einem Winkel von 90° bis 180°, zur Strömungsrichtung der Luft welche senkrecht zur Querschnittsfläche der Luftauslassöffnung des Wasserkastens in die Luftauslassöffnung eintritt, ist. Die vier in diesem Abschnitt aufgeführten Weiterbildungen der Erfindung bezüglich der relativen Anordnung der Luftaustrittsöffnung der Luftleitstruktur zur Luftauslassöffnung des Wasserkastens bewirken jeweils den Vorteil, dass die aus der Luftaustrittsöffnung der Luftleitstruktur austretende Luft eine Umlenkung erfährt, so dass in der Luft enthaltenes Wasser, insbesondere tropfenförmiges Wasser, aus der Luft abgeschieden werden kann, bevor die Luft den Innenraum über die Luftauslassöffnung des Wasserkastens wieder verlässt.

Die Luftleitstruktur umfasst wenigstens eine rohrförmige Leitung und / oder wenigstens eine trichterförmige Leitung. Eine gemäss dieser Weiterbildung der Erfindung ausgestaltete Luftleitstruktur ist besonders einfach herstellbar. Ein Wasserkasten umfassend eine solche Luftleitstruktur ist somit ebenfalls besonders einfach herstellbar. Die rohrförmige Leitung ist beispielsweise eine gebogene rohrförmige Leitung oder eine nicht gebogene rohrförmige Leitung. Die rohrförmige Leitung kann beispielsweise aber auch einen Hauptabschnitt umfassen, welcher beispielsweise mit zwei Armen verbunden ist, welche sich vom Hauptabschnitt wegerstrecken. In diesem Fall ist die rohrförmige Leitung beispielsweise Y-förmig ausgestaltet. Im Falle einer rohrförmigen Leitung ist eine nicht gebogene rohrförmige Leitung, das heisst, eine sich linear erstreckende rohrförmige Leitung bevorzugt. Ein Wasserkasten umfassend eine nicht gebogene rohrförmige Leitung beziehungsweise eine sich linear erstreckende rohrförmige Leitung ist besonders kompakt und beansprucht vergleichsweise wenig Bauraum in einem Kraftfahrzeug.

Nach einer Weiterbildung der Erfindung ist die Seitenwandung, welche benachbart, insbesondere unmittelbar benachbart, zum wenigstens einen Abschnitt der Luftleitstruktur, welcher im Innenraum angeordnet ist, ist, im Wesentlichen parallel zum wenigstens einen Abschnitt der Luftleitstruktur, welcher im Innenraum angeordnet ist, angeordnet. Ein Wasserkasten gemäss dieser Weiterbildung der Erfindung ist besonders strömungsgünstig.

Nach einer Weiterbildung der Erfindung ist die Seitenwandung, welche benachbart, insbesondere unmittelbar benachbart, zum wenigstens einen Abschnitt der Luftleitstruktur, welcher im Innenraum angeordnet ist, ist, im Wesentlichen koaxial zum wenigstens einen Abschnitt der Luftleitstruktur, welcher im Innenraum angeordnet ist, angeordnet. Ein Wasserkasten gemäss dieser Weiterbildung der Erfindung ist besonders strömungsgünstig.

Nach einer Weiterbildung der Erfindung ist im Innenraum und / oder an der Luftauslassöffnung wenigstens ein luftdurchlässiger Filter angeordnet. Bevorzugt ist der Filter zumindest derart angeordnet und weist eine derartige Erstreckung auf, dass die aus der Luftaustrittsöffnung der Luftleitstruktur austretende Luft durch den Filter hindurchströmen muss, bevor die Luft den Wasserkasten verlassen kann. Der Filter ist beispielsweise ein fasriger Filter welcher gegebenenfalls Aktivkohlebestandteile aufweist. Der Filter ist beispielsweise ein Partikelfilter wie beispielsweise ein Pollenfilter. Falls das Kraftfahrzeug, zusätzlich zum erfindungsgemässen Wasserkasten umfassend einen Filter, auch eine Klimaanlage aufweist, kann, aufgrund des Filters im Wasserkasten, auf die Anordnung eines Filter in der Klimaanlage verzichtet werden. Der in einem Innenraum eines Wasserkastens angeordnete Filter, wobei der Wasserkasten im Motorraum angeordnet ist, ist besser zugänglich als der Filter in einer Klimaanlage welche im Fahrgastraum angeordnet ist. Bevorzugt ist der Filter im grössten Strömungsquerschnitt des Innenraumes positioniert. Bevorzugter ist der Filter im grössten Strömungsquerschnitt eines Raumes des Wasserkastens positioniert, wobei der Raum aus dem Innenraum sowie der Luftauslassöffnung gebildet ist. Im grössten Strömungsquerschnitt des Innenraumes beziehungsweise des genannten Raumes weist die Luft den höchsten Druck auf. Beim Hindurchströmen der Luft durch den Filter wird der Druck der Luft verringert. Durch die Positionierung des Filters im grössten Strömungsquerschnitt des Raumes kann somit die Druckdifferenz zwischen dem Druck der Luft im Bereich der Lufteinlassöffnung des Wasserkastens und dem Druck der Luft im Bereich der Luftauslassöffnung des Wasserkastens gering gehalten werden kann. Bevorzugt ist der Filter im Wesentlichen auf gleicher Höhe oder oberhalb, bevorzugt oberhalb, der untersten Kante der Luftaustrittsöffnung der Luftleitstruktur angeordnet. Dies bewirkt den Vorteil, dass die Luft, bevor diese in den Filter strömt, bereits Wasser abgegeben hat. Somit strömt bereits entfeuchtete Luft in den Filter. Somit ist auch die Gefahr, dass der Filter durch die durch den Filter hindurchströmende Luft feucht wird, und dadurch beispielsweise verpilzt, verringert. Zudem strömt konstant entfeuchtete Luft durch den Filter, welche allfällige im Filter vorhandene Feuchtigkeit mitreissen kann. Bevorzugt ist der Filter plattenförmig ausgestaltet. Bevorzugt erstreckt sich die Luftleitstruktur durch eine Perforation im Filter hindurch.

Nach einer Weiterbildung der Erfindung weist der Wasserkasten eine Wasservorabscheidestruktur auf zum Vorabscheiden von durch den Hohlraum der Luftleitstruktur hindurchströmendem Wasser aus dem Hohlraum bevor dieses Wasser aus der Luftaustrittsöffnung der Luftleitstruktur austreten kann. Bevorzugt umfasst die Wasservorabscheidestruktur einen Abschnitt einer Wandung der Luftleitstruktur, wobei die Wandung den Hohlraum der Luftleitstruktur begrenzt und wobei der Abschnitt wenigstens eine Wasserausgangsöffnung bildet zum Abscheiden von durch den Hohlraum der Luftleitstruktur hindurchströmendem Wasser aus dem Hohlraum. Der genannte Abschnitt der Wandung, welche die Wasserausgangsöffnung bildet, kann im Innenraum und / oder ausserhalb des Innenraumes angeordnet sein. Bevorzugt weist die Wasservorabscheidestruktur, zusätzlich zum genannten Abschnitt der Wandung der Luftleitstruktur, welcher die wenigstens eine Wasserausgangsöffnung bildet, eine Wasserableitstruktur auf, welche mit der Wasserausgangsöffnung verbunden ist zum Ableiten von Wasser aus dem Hohlraum der Luftleitstruktur. Mittels einer Wasservorabscheidestruktur, umfassend den genannten Abschnitt sowie die Wasserableitstruktur, kann das Wasser aus dem Hohlraum abgeschieden und örtlich gezielt ausserhalb des Wasserkastens abgeschieden werden. Bevorzugt weist die Wasservorabscheidestruktur ein an der Wasserausgangsöffnung angeordnetes Verschlussmittel auf zum Versperren und Freigeben der Wasserausgangsöffnung. Bevorzugt weist die Wasservorabscheidestruktur eine im Hohlraum der Luftleitstruktur angeordnete Auffang- und Ableitstruktur zum wenigstens teilweise Auffangen und Ableiten von durch den Hohlraum der Luftleitstruktur hindurchströmendem Wasser in die Wassereingangsöffnung. Bevorzugt umfasst die Auffang- und Ableitstruktur einen im Hohlraum angeordneten Kragen welcher in Zusammenarbeit mit der Wandung der Luftleitstruktur, welche den Hohlraum der Luftleitstruktur begrenzt, eine Vertiefung bildet, wobei die Vertiefung geeignet ist durch die Wassereinlassöffnung in den Hohlraum einströmendes Wasser wenigstens teilweise aufzufangen und in die Wasserausgangsöffnung abzuleiten. Bevorzugt sind die Wasserableitstruktur und die Wasserauslassöffnung in der Bodenwandung fluidisch miteinander verbunden, so dass in der Wasserableitstruktur strömendes Wasser über die Wasserauslassöffnung aus dem Wasserkasten abgeschieden werden kann oder dass über die Wasserauslassöffnung den Innenraum verlassendes Wasser den Wasserkasten über die Wasserableitstruktur verlassen kann. Bevorzugt weist die Wasserableitstruktur wenigstens eine Wasseraustrittsöffnung auf, welche parallel zur Wasserauslassöffnung und neben der Wasserauslassöffnung, insbesondere unmittelbar neben der Wasserauslassöffnung, angeordnet ist. Ein Wasserkasten gemäss dieser Weiterbildung der Erfindung ermöglicht eine besonders effiziente Abscheidung von Schwallwasser.

Falls der Wasserkasten einen Filter aufweist, erstreckt sich beispielsweise die Wasservorabscheidestruktur zur Bodenwandung hin beispielsweise durch eine Perforation im Filter.

Nach einer Weiterbildung der Erfindung ist die Wasserauslassöffnung vorgesehen um Wasser aus dem Wasserkasten abzuscheiden.

Nach einer Weiterbildung der Erfindung ist im Innenraum eine Wasserabweiservorrichtung angeordnet zum Verhindern, dass Wasser, insbesondere Schwallwasser und / oder tropfenförmiges Wasser, entlang der Bodenwandung und / oder Seitenwandung in Richtung der Luftauslassöffnung des Wasserkastens strömen kann. Bevorzugt ist die Wasserabweiservorrichtung an der Bodenwandung und / oder der Seitenwandung befestigt. Bevorzugt umfasst die Wasserabweiservorrichtung ein Kragen welcher im Innenraum an der Bodenwandung und / oder der Seitenwandung angeordnet ist und sich in den Innenraum hineinerstreckt. Bevorzugt ist die Luftauslassöffnung oberhalb der Wasserabweiservorrichtung angeordnet.

Nach einer Weiterbildung der Erfindung ist die wenigstens eine Luftauslassöffnung des Wasserkastens in der Seitenwandung und / oder in der Deckenwandung, bevorzugt in der Seitenwandung, angeordnet.

Nach einer Weiterbildung der Erfindung entspricht der kleinste Strömungsquerschnitt in der Luftleitstruktur im Wesentlichen dem kleinsten Strömungsquerschnitt im Innenraum, bevorzugt im Wesentlichen dem kleinsten Strömungsquerschnitt in einem Raum des Wasserkastens gebildet aus dem Innenraum und der Luftauslassöffnung. Dies bedingt den Vorteil, dass die Druckdifferenz zwischen dem Druck der Luft im Bereich der Lufteinlassöffnung des Wasserkastens und dem Druck der Luft im Bereich der Luftauslassöffnung des Wasserkastens gering gehalten werden kann.

Nach einer Weiterbildung der Erfindung ist die Seitenwandung als vieleckiger Hohlkörper, beispielsweise als quaderförmiger Hohlkörper, oder als zylinderförmiger Hohlkörper ausgebildet.

Nach einer Weiterbildung der Erfindung ist die Bodenwandung als konischer Hohlkörper ausgebildet.

Nach einer Weiterbildung der Erfindung ist die wenigstens eine Luftaustrittsöffnung zur Bodenwandung hin gerichtet. Diese Weiterbildung erlaubt eine besonders effiziente Wasserabscheidung aus der durch den Wasserkasten hindurchströmenden Luft.

Nach einer Weiterbildung der Erfindung ist die unterste Kante der Luftaustrittsöffnung, welche benachbart, insbesondere unmittelbar benachbart, ist zur Luftauslassöffnung, im Wesentlichen auf gleicher Höhe oder unterhalb der untersten Kante der Luftauslassöffnung angeordnet. Diese Weiterbildung erlaubt eine besonders effiziente Wasserabscheidung aus der durch den Wasserkasten hindurchströmenden Luft.

Nach einer Weiterbildung der Erfindung ist die Wasserauslassöffnung an der tiefsten Stelle der Bodenwandung angeordnet. Dies erlaubt eine effiziente Abscheidung von Wasser aus dem Innenraum des Wasserkastens.

Nach einer Weiterbildung der Erfindung ist der Wasserkasten im Wesentlichen aus Kunststoff, bevorzugt vollständig aus Kunststoff, hergestellt. Dies erlaubt eine einfache und effiziente Herstellung des Wasserkastens.

Nach einer Weiterbildung der Erfindung ist der Wasserkasten kein Bestandteil der Karosserie. Der Wasserkasten hat somit keine tragende Funktion oder eine Stabilitätsfunktion.

Nach einer Weiterbildung der Erfindung ist die Luftauslassöffnung des Wasserkastens als Langloch oder als Schlitz ausgebildet.

Nach einer Weiterbildung der Erfindung ist in der Seitenwandung wenigstens ein Durchbruch angeordnet, welcher unmittelbar an die in der Seitenwandung angeordnete Luftauslassöffnung anschliesst und sich durch die Seitenwandung hindurcherstreckt. Durch den in der Seitenwandung angeordnete Durchbruch kann den Innenraum durch die Luftauslassöffnung verlassende Luft durch die Seitenwandung hindurchströmen.

Nach einer Weiterbildung der Erfindung ist in der Deckenwandung wenigstens ein Durchbruch angeordnet, welcher unmittelbar an die in der Deckenwandung angeordnete Luftauslassöffnung anschliesst und sich durch die Deckenwandung hindurcherstreckt. Durch den in der Deckenwandung angeordneten Durchbruch kann den Innenraum über die Luftauslassöffnung verlassende Luft durch die Deckenwandung hindurchströmen.

Nach einer Weiterbildung der Erfindung ist die in der Seitenwandung angeordnete Luftauslassöffnung durch die Seitenwandung gebildet.

Nach einer Weiterbildung der Erfindung ist die in der Deckenwandung angeordnete Luftauslassöffnung durch die Deckenwandung gebildet.

Nach einer Weiterbildung der Erfindung ist in der Seitenwandung wenigstens ein Durchbruch angeordnet, welcher unmittelbar an die in der Seitenwandung angeordnete Luftauslassöffnung anschliesst und sich durch die Seitenwandung hindurcherstreckt, wobei die Luftauslassöffnung durch eine in den Durchbruch eingreifende Luftabführleitung gebildet ist.

Nach einer Weiterbildung der Erfindung ist in der Deckenwandung wenigstens ein Durchbruch angeordnet, welcher unmittelbar an die in der Deckenwandung angeordnete Luftauslassöffnung anschliesst und sich durch die Deckenwandung hindurcherstreckt, wobei die Luftauslassöffnung durch eine in den Durchbruch eingreifende Luftabführleitung gebildet ist.

Es wird zudem ein Kraftfahrzeug umfassend den erfindungsgemässen Wasserkasten angegeben.

Nach einer Weiterbildung der Erfindung weist das Kraftfahrzeug einen Fahrgastraum sowie eine Klimaanlage oder ein Klimamodul auf, wobei die Klimaanlage oder das Klimamodul mit dem Fahrgastraum verbunden ist zum Zuführen von Luft aus der Klimaanlage oder dem Klimamodul in den Fahrgastraum und wobei die Luftauslassöffnung des Wasserkastens mit der Klimaanlage oder dem Klimamodul verbunden ist zum Zuführen von Luft aus dem Wasserkasten in die Klimaanlage oder das Klimamodul.

Nach einer Weiterbildung der Erfindung weist das Kraftfahrzeug einen Motorraum und einen Fahrgastraum auf, wobei der Wasserkasten im Motorraum und die Klimaanlage im Fahrgastraum angeordnet ist.

Nach einer Weiterbildung der Erfindung weist das Kraftfahrzeug eine Stirnwand auf welche das Kraftfahrzeug in einen Motorraum und einen Fahrgastraum trennt.

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
Fig.1 schematisch einen Schnitt durch ein Kraftfahrzeug umfassend eine erste Ausführungsform des erfindungsgemässen Wasserkastens sowie eine Klimaanlage,
Fig.2 schematisch eine zweite Ausführungsform des erfindungsgemässen Wasserkastens,
Fig.3 schematisch eine dritte Ausführungsform des erfindungsgemässen Wasserkastens und
Fig.4 schematisch einen Teilbereich des Schnittes durch das Kraftfahrzeug gemäss Fig.1 umfassend eine vierte Ausführungsform des erfindungsgemässen Wasserkastens.

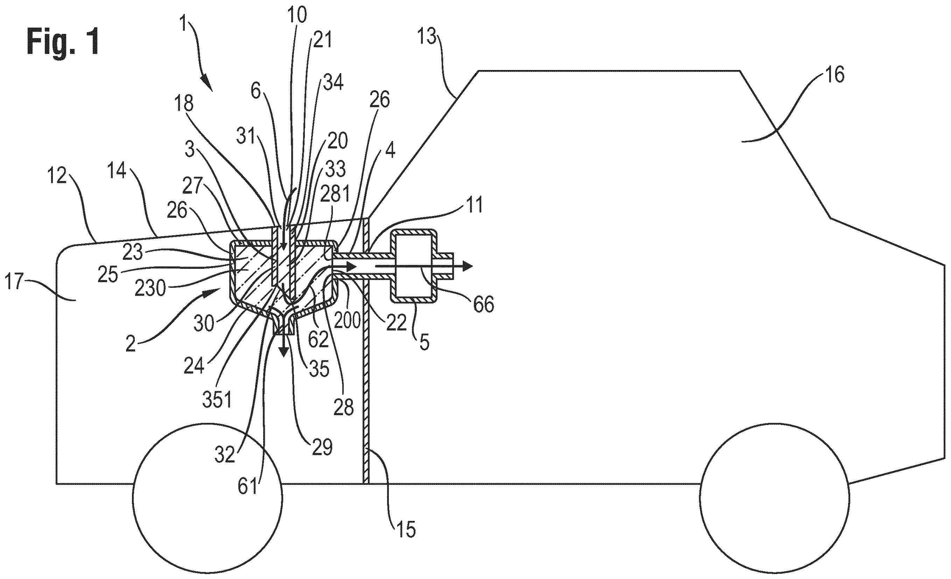

Das in Figur 1 gezeigte Kraftfahrzeug 1 weist in üblicher Weise eine Karosserie 12, eine Windschutzscheibe 13 und eine Motorhaube 14 auf. Die Motorhaube 14 weist einen Durchgang 18 auf welcher durch ein Gitter 10 abgedeckt ist. Eine Stirnwand 15 trennt den Innenraum des Kraftfahrzeuges 1 in einen Fahrgastraum 16 und einen Motorraum 17. Unterhalb der Motorhaube 14 ist im Motorraum 17 ein Wasserkasten 2, welcher beispielsweise aus Kunststoff hergestellt ist, angeordnet. Der Kunststoff weist zum Beispiel mit Talkum gefülltes Polypropylen auf. Der Wasserkasten 2 kann aber auch ein Bestandteil der Karosserie 12 sein und beispielsweise aus Metall hergestellt sein. Der Wasserkasten 2 umfasst einen Innenraum 23, welcher mit strichpunktierten Linien schraffiert ist, eine kreisförmige Lufteinlassöffnung 21 zum Zuführen von Luft in den Innenraum 23 sowie eine kreisförmige Luftauslassöffnung 22 zum Abführen von Luft aus dem Innenraum 23, eine als konischen Hohlkörper ausgebildete Bodenwandung 24 und eine als quaderförmigen Hohlkörper ausgebildete Seitenwandung 25 auf, welche umlaufend an der Bodenwandung 24 befestigt ist und sich nach oben erstreckt. Die kreisförmige Luftauslassöffnung 22 ist in der Seitenwandung 25 angeordnet und weist eine unterste Kante 28 sowie eine oberste Kante 281 auf. In der Seitenwandung 25 ist zudem ein Durchbruch 200 angeordnet, welcher unmittelbar an die Luftauslassöffnung 22 anschliesst und welcher sich durch die Seitenwandung 25 hindurcherstreckt. Wie in Figur 1 ersichtlich, wird die Luftauslassöffnung 22 durch eine Luftabführleitung 4 gebildet, welche in den Durchbruch 200 eingreift. Die Funktion der Luftabführleitung 4 wird noch genauer erläutert. Die Bodenwandung 24 ist luftdicht, lösbar oder luftdicht, unlösbar an der Seitenwandung 25 befestigt. Aus Dichtigkeitsgründen bezüglich Wasser und Luft ist die Bodenwandung 24 bevorzugt luftdicht, unlösbar, an der Seitenwandung 25 befestigt. Die luftdicht, unlösbar aneinander befestigte Bodenwandung 24 und Seitenwandung 25 sind beispielsweise einstückig miteinander verbunden. Die Seitenwandung 25 weist einen obersten, umlaufenden Rand 26 auf, an welchem eine Deckenwandung 27 befestigt ist. In Figur 1 ist ersichtlich, dass die Lufteinlassöffnung 21 oberhalb des obersten, umlaufenden Randes 26 angeordnet ist. Die Seitenwandung 25 ist luftdicht, lösbar oder luftdicht, unlösbar an der Deckenwandung 27 befestigt. Bevorzugt ist der oberste Rand 26 der Seitenwandung 25 luftdicht, lösbar an der Deckenwandung 27 befestigt, beispielsweise mittels einer Rastverbindung, da hierdurch der Innenraum 23 des Wasserkastens 2 sich leichter warten und reinigen lässt. Zudem kann ein allfällig im Innenraum 23 angeordneter Filter, wie noch beschrieben wird, leichter gewartet und ausgetauscht werden. Die Bodenwandung 24, die Seitenwandung 25 sowie die Deckenwandung 27 begrenzen gemeinsam den Innenraum 23. Der Wasserkasten 2 weist zudem eine Luftleitstruktur, welche als nicht gebogene rohrförmige Leitung 3 ausgebildet ist, oder mit anderen Worten ausgedrückt, welche als eine sich linear erstreckende rohrförmige Leitung 3 ausgebildet ist, mit einer kreisförmigen Lufteintrittsöffnung 31 sowie einer kreisförmigen Luftaustrittsöffnung 32 auf, wobei die Lufteintrittöffnung 31 mit der Luftaustrittsöffnung 32 über einen Hohlraum 33 miteinander verbunden sind. Die rohrförmige Leitung 3 erstreckt sich durch einen Durchbruch 20 in der Deckenwandung 27 und weist einen ersten Abschnitt 34, umfassend die Lufteintrittsöffnung 31, welche die Lufteinlassöffnung 21 des Wasserkastens 2 bildet, und einen zweiten Abschnitt 30, umfassend die Luftaustrittsöffnung 32, auf. Die Lufteinlassöffnung 21 sowie die Lufteintrittsöffnung 32 weisen somit dieselbe Kreisform auf. Wie in Figur 1 ersichtlich, sind somit der erste Abschnitt 34, und daher auch die Lufteintrittsöffnung 31 beziehungsweise die Lufteinlassöffnung 21 ausserhalb des Innenraums 23 angeordnet und der zweite Abschnitt 30, und daher auch die Luftaustrittsöffnung 32, im Innenraum 23 angeordnet. Der mittels des Gitters 10 abgedeckte Durchgang 18 in der Motorhaube 14 ist unmittelbar mit der Lufteintrittsöffnung 31 der rohrförmigen Leitung 3 verbunden zum Zuführen von Luft von ausserhalb des Kraftfahrzeuges 1 in den Hohlraum 33 der rohrförmigen Leitung 3. Das Gitter 10 verhindert beispielsweise den Eintritt von Laub oder anderen flächigen Verunreinigungen in den Hohlraum 33 der rohrförmigen Leitung 3. Wie in Figur 1 ersichtlich, ist die Luftaustrittsöffnung 32 der rohrförmigen Leitung 3 zur Bodenwandung 24 hin gerichtet. Der im Innenraum 23 des Wasserkastens 2 angeordnete zweite Abschnitt 30 der rohrförmigen Leitung 3 ist unmittelbar benachbart zur Seitenwandung 25 angeordnet sowie vollständig von der Bodenwandung 24 und der Seitenwandung 25 beabstandet. Die vollständig Beabstandung des zweiten Abschnittes 30 von der Bodenwandung 24 und der Seitenwandung 25, beziehungsweise die Tatsache, dass zwischen dem zweiten Abschnitt 30 und der Seitenwandung 25 sowie der Bodenwandung 24 der Innenraum 23 des Wasserkastens 2 angeordnet ist, bewirkt den Vorteil, dass der erfindungsgemässe Wasserkasten 2 einen grösseren Freiheitsgrad für die Positionierung der Luftauslassöffnung 22 aufweist als Wasserkästen des Standes der Technik. Der grössere Freiheitsgrad bei der Positionierung der Luftauslassöffnung 22 bewirkt wiederum den Vorteil, dass der erfindungsgemässe Wasserkasten 2 freier positioniert werden kann in einem Innenraum, insbesondere in einem Motorraum eines Kraftfahrzeuges, als Wasserkästen des Standes der Technik. Die Anordnung des zweiten Abschnittes 30 der rohrförmigen Leitung 3 unmittelbar benachbart zur Seitenwandung 25 bewirkt den Vorteil, dass die Lufteinlassöffnung und die Luftauslassöffnung des erfindungsgemässen Wasserkastens vergleichsweise näher relativ zueinander angeordnet sind als die Lufteinlassöffnung und die Luftauslassöffnung von Wasserkästen des Standes der Technik. Wie schon dargelegt, ist die Luftaustrittsöffnung 32 kreisförmig ausgebildet. Zudem ist die Luftaustrittsöffnung 32, wie in Figur 1 ersichtlich, schräg angeordnet und weist eine unterste Kante 35 sowie eine oberste Kante 351 auf, wobei die unterste Kante 35 unmittelbar benachbart zur Luftauslassöffnung 22 angeordnet ist. In Figur 1 ist erkennbar, dass die unterste Kante 35 der Luftaustrittsöffnung 32 unterhalb der untersten Kante 28 der kreisförmigen Luftauslassöffnung 22 des Wasserkastens 2 angeordnet ist. Dies bewirkt den Vorteil, dass Luft, welche über die Lufteinlassöffnung 21 des Wasserkastens 2 beziehungsweise über die Lufteintrittsöffnung 31 der rohrförmigen Leitung 3 in den Innenraum 23 hineinströmt, und wieder über die Luftauslassöffnung 22 des Wasserkastens 2 aus dem Innenraum 23 herausströmt, beispielsweise eine Umlenkung, wie mit Pfeil 62 angedeutet, erfährt. Durch diese Umlenkung wird in der Luft enthaltenes Wasser, insbesondere tropfenförmiges Wasser, aus der durch den Innenraum 23 hindurchströmenden Luft abgeschieden. Der Wasserkasten 2 weist zusätzlich eine an der tiefsten Stelle der Bodenwandung 24 angeordnete Wasserauslassöffnung 29 auf zum Abführen von Wasser aus dem Innenraum 23. Die Wasserauslassöffnung 29 wird durch ein nicht dargestelltes Ventil gebildet, welches die Wasserauslassöffnung 29 versperren kann und die versperrte Wasserauslassöffnung 29 wieder freigeben kann. Das Ventil ermöglicht einerseits einen gesteuerten Wasserauslass aus dem Innenraum 23, und verhindert andererseits, dass Fremdluft in den Innenraum 23 eintreten kann. Die schon erläuterte Luftabführleitung 4 erstreckt sich durch einen Durchlass 11 in der Stirnwand 15 hindurch und ist mit einer im Fahrgastraum 16 angeordneten Klimaanlage 5 verbunden. Durch die Luftabführleitung 4 kann somit aus dem Innenraum 23 Luft der Klimaanlage 5 zugeführt werden. Die Klimaanlage 5 ist wiederum mit dem Fahrgastraum 16 verbunden zum Zuführen von durch die Klimaanlage 5 klimatisierten Luft aus der Klimaanlage 5 in den Fahrgastraum 16. Dem Fachmann ist der Aufbau sowie die Betriebsweise von Klimaanlagen bekannt. Die durch die Klimaanlage 5 hindurchströmende sowie dann in den Fahrgastraum 16 hineinströmende Luft ist mit dem Pfeil 66 angedeutet.

Der erfindungsgemässe Wasserkasten 2 gemäss Figur 1 ist geeignet, Luft und Wasser im Innenraum 23 voneinander zu trennen. Schwallwasser, wie beispielsweise Regenwasser oder Wasser einer Kraftfahrzeugwaschanlage, sowie mit Wasser, insbesondere tropfenförmigem Wasser, beladene Luft können, wie mit Pfeil 6 angedeutet, über den Durchgang 18 in der Motorhaube 14 sowie der Lufteinlassöffnung 21 des Wasserkastens 2 beziehungsweise der Lufteintrittsöffnung 31 der rohrförmigen Leitung 3, welche die Lufteinlassöffnung 21 bildet, in den Hohlraum 33 der rohrförmigen Leitung 3 gelangen und den Hohlraum 33 über die Luftaustrittsöffnung 32 in einen Teilbereich 230 des Innenraumes 23 wieder verlassen, welcher mit der Wasserauslassöffnung 29 sowie der Luftauslassöffnung 22 verbunden ist. In den Innenraum 23, beziehungsweise in den Teilbereich 230 des Innenraumes 23, gelangendes Schwallwasser wird von der Luft getrennt, indem über die Wasserauslassöffnung 29 gemäss Pfeil 61 das Schwallwasser aus dem Innenraum 23 abgeschieden wird. In den Innenraum 23, beziehungsweise in den Teilbereich 230 des Innenraumes 23, gelangende und mit Wasser, insbesondere mit tropfenförmigem Wasser, beladene Luft wird von dem in der Luft vorhandenen Wasser, insbesondere tropfenförmigen Wasser, getrennt aufgrund der bereits erläuterten relativen Lage der untersten Kante 35 der Luftaustrittsöffnung 32 der rohrförmigen Leitung 3 zur untersten Kante 28 der Luftauslassöffnung 22 des Wasserkastens 2.

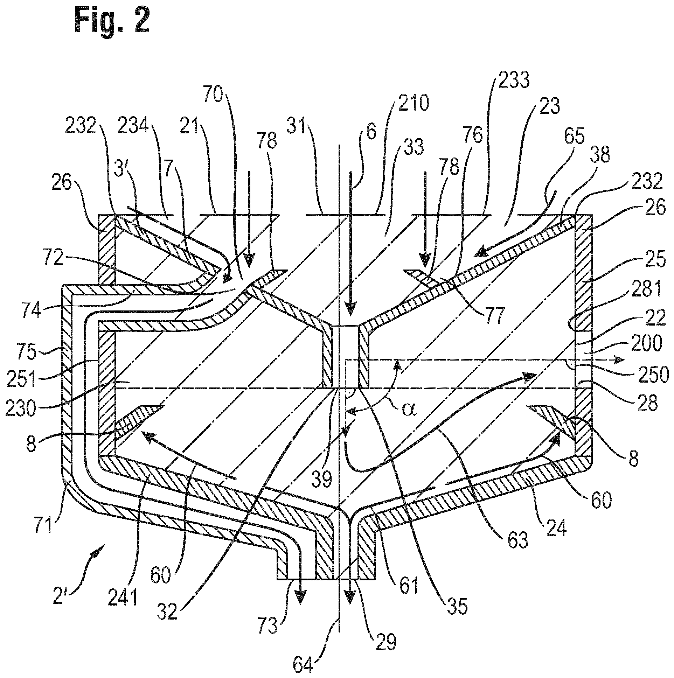

Alternative Ausführungsformen der Erfindung sind in den Figuren 2 bis 4 dargestellt, wobei gleiche oder ähnliche Merkmale jeweils mit den gleichen Bezugszeichen bezeichnet sind.

Fig.2 offenbart schematisch eine zweite Ausführungsform des erfindungsgemässen Wasserkastens. Der in Figur 2 gezeigte Wasserkasten 2' umfasst einen Innenraum 23, welcher mit strichpunktierten Linien schraffiert ist, eine kreisförmige Lufteinlassöffnung 21 zum Zuführen von Luft in den Innenraum 23, welche mit einer gestrichelten Linie angedeutet ist, sowie eine kreisförmige Luftauslassöffnung 22 zum Abführen von Luft aus dem Innenraum 23. Der Wasserkasten 2' weist zudem eine als konischen Hohlkörper ausgebildete Bodenwandung 24 und eine als zylinderförmigen Hohlkörper ausgebildete Seitenwandung 25 auf, welche umlaufend an der Bodenwandung 24 befestigt ist und sich nach oben erstreckt. Die kreisförmige Luftauslassöffnung 22 ist in der Seitenwandung 25 angeordnet und weist eine unterste Kante 28 und eine oberste Kante 281 auf. In der Seitenwandung 25 ist zudem ein Durchbruch 200 angeordnet, welcher unmittelbar an die Luftauslassöffnung 22 anschliesst und sich durch die Seitenwandung 25 hindurcherstreckt. Wie in Figur 2 ersichtlich, wird die Luftauslassöffnung 22 durch die Seitenwandung 25 gebildet. Die Seitenwandung 25 weist einen obersten, umlaufenden Rand 26 auf. Der oberste, umlaufende Rand 26 begrenzt einen Teilbereich 234 des Innenraumes 23 des Wasserkastens 2'. Wie in Figur 2 ersichtlich, ist die Lufteinlassöffnung 21 innerhalb einer obersten Kante 232 des obersten, umlaufendes Randes 26 beziehungsweise innerhalb einer von der obersten Kante 232 des obersten, umlaufenden Randes 26 begrenzten Fläche 233 angeordnet. Die Fläche 233 ist eine zweidimensionale Teilmenge des Innenraumes 23 des Wasserkastens 2'. Die Fläche 233 entspricht bei der Ausführungsform des Wasserkstens 2' gemäss Figur 2, wie in Figur 2 ersichtlich, im Wesentlichen der Querschnittsfläche 210 der Lufteinlassöffnung 21. Die Bodenwandung 24 und die Seitenwandung 25 begrenzen gemeinsam den Innenraum 23. Des Weiteren weist der Wasserkasten 2' eine Luftleitstruktur, welche als trichterförmige Leitung 3' ausgebildet ist, auf. Die trichterförmige Leitung 3' umfasst eine kreisförmige Lufteintrittsöffnung 31 sowie eine kreisförmige Luftaustrittsöffnung 32, wobei die Lufteintrittöffnung 31 mit der Luftaustrittsöffnung 32 über einen Hohlraum 33 miteinander verbunden sind. Wie in Figur 2 ersichtlich, bildet die Lufteintrittsöffnung 31 der trichterförmigen Leitung 3' die Lufteinlassöffnung 21 des Wasserkastens 2'. Der oberste Rand 26 der Seitenwandung 25 ist luftdicht, lösbar oder luftdicht, unlösbar an der trichterförmigen Leitung 3' befestigt. Bevorzugt ist der oberste Rand 26 der Seitenwandung 25 luftdicht, lösbar an der trichterförmigen Leitung 3' befestigt, beispielsweise mittels einer Rastverbindung, da sich hierdurch der Innenraum 23 des Wasserkastens 2' leichter warten und reinigen lässt. Zudem kann ein allfällig im Innenraum 23 angeordneter Filter, wie noch beschrieben wird, leichter gewartet und ausgetauscht werden. Die trichterförmige Leitung 3' ist vollständig im Innenraum 23 angeordnet. Somit ist auch die Luftaustrittsöffnung 32 der trichterförmigen Leitung 3' im Innenraum 23 angeordnet. Wie in Figur 2 ersichtlich, ist die Luftaustrittsöffnung 32 der trichterförmigen Leitung 3' zur Bodenwandung 24 hin gerichtet. Die vollständig im Innenraum 23 angeordnete trichterförmige Leitung 3' ist unmittelbar benachbart zur Seitenwandung 25 angeordnet sowie im Wesentlichen vollständig von der Bodenwandung 24 und der Seitenwandung 25 beabstandet. Die trichterförmige Leitung 3' ist im Wesentlichen und nicht vollständig von der Seitenwandung 25 und der Bodenwandung 24 beabstandet, da die trichterförmige Leitung 3', wie bereits beschrieben, am obersten Rand 26 der Seitenwandung 25 befestigt ist. Die im Wesentlichen vollständige Beabstandung der trichterförmigen Leitung 3' von der Bodenwandung 24 und der Seitenwandung 25, beziehungsweise die Tatsache, dass zwischen im Wesentlichen der gesamten tricherförmigen Leitung 3' und der Seitenwandung 25 sowie der Bodenwandung 24 der Innenraum 23 des Wasserkastens 2 angeordnet ist, bewirkt den Vorteil, dass der erfindungsgemässe Wasserkasten 2' einen grösserer Freiheitsgrad für die Positionierung der Luftauslassöffnung 22 aufweist als Wasserkästen des Standes der Technik. Der grössere Freiheitsgrad bei der Positionierung der Luftauslassöffnung 22 bewirkt wiederum den Vorteil, dass der erfindungsgemässe Wasserkasten 2' freier positioniert werden kann in einem Innenraum, insbesondere in einem Motorraum eines Kraftfahrzeuges, als Wasserkästen des Standes der Technik. Die Anordnung der trichterförmigen Leitung 3' unmittelbar benachbart zur Seitenwandung 25 bewirkt den Vorteil, dass die Lufteinlassöffnung 21 und die Luftauslassöffnung 22 des erfindungsgemässen Wasserkastens 2' vergleichsweise näher relativ zueinander angeordnet sind als die Lufteinlassöffnung und die Luftauslassöffnung von Wasserkästen des Standes der Technik.

Wie schon dargelegt, ist die Luftaustrittsöffnung 32 kreisförmig ausgebildet. Die Luftaustrittsöffnung 32 liegt zudem in einer horizontalen, planaren Ebene. Somit existiert für die Luftaustrittsöffnung 32 ausschliesslich eine unterste Kante 35 welche dieselbe Kreisform aufweist wie die Luftaustrittsöffnung 32. In Figur 2 ist ersichtlich, dass die unterste, kreisförmige Kante 35 der Luftaustrittsöffnung 32 der trichterförmigen Leitung 3' auf gleicher Höhe wie die unterste Kante 28 der kreisförmigen Luftauslassöffnung 22 des Wasserkastens 2' angeordnet ist, wie dies mit der gestrichelten, horizontal sich von untersten Kante 35 der Luftaustrittsöffnung 32 zur unterste Kante 28 der Luftauslassöffnung 22 des Wasserkastens 2' erstreckende Linie angedeutet ist. Dies bewirkt den Vorteil, dass Luft, welche über die Lufteinlassöffnung 21 des Wasserkastens 2' beziehungsweise über die Lufteintrittsöffnung 31 der trichterförmigen Leitung 3' in den Innenraum 23 hineinströmt, und wieder über die Luftauslassöffnung 22 des Wasserkastens 2' aus dem Innenraum 23 herausströmt, beispielsweise eine Umlenkung, wie mit Pfeil 63 angedeutet, erfährt. Durch diese Umlenkung wird in der Luft enthaltenes Wasser, insbesondere tropfenförmiges Wasser, aus der durch den Innenraum 23 hindurchströmenden Luft abgeschieden. Der Wasserkasten 2' weist zusätzlich eine an der tiefsten Stelle der Bodenwandung 24 angeordnete Wasserauslassöffnung 29 auf zum Abführen von Wasser aus dem Innenraum 23. Die Wasserauslassöffnung 29 wird bei der Ausführungsform des Wasserkastens 2' gemäss Figur 2 durch die Bodenwandung 24 gebildet. Die Wasserauslassöffnung 29 ist unterhalb der Luftaustrittsöffnung 32 der trichterförmigen Leitung 3' und auf einer gemeinsamen Achse 64 mit der Luftaustrittsöffnung 32 angeordnet. Diese Anordnung bewirkt den Vorteil, dass durch die Luftaustrittsöffnung 32 herausströmendes Schwallwasser direkt in die Wasserauslassöffnung 29 fliessen kann.

Der erfindungsgemässe Wasserkasten 2' gemäss Figur 2 ist geeignet, Luft und Wasser im Innenraum 23 voneinander zu trennen. Schwallwasser, wie beispielsweise Regenwasser oder Wasser einer Kraftfahrzeugwaschanlage, sowie mit Wasser, insbesondere tropfenförmigem Wasser, beladene Luft können über die Lufteinlassöffnung 21 des Wasserkastens 2' beziehungsweise die Lufteintrittsöffnung 31 der trichterförmigen Leitung 3', welche die Lufteinlassöffnung 21 bildet, in den Hohlraum 33 der trichterförmigen Leitung 3' gelangen und den Hohlraum 33 über die Luftaustrittsöffnung 32 in einen Teilbereich 230 des Innenraumes 23 wieder verlassen, welcher mit der Wasserauslassöffnung 29 sowie der Luftauslassöffnung 22 verbunden ist. Die Summe aus dem Volumen des Teilbereiches 230 sowie dem Volumen des Hohlraumes 33 und dem Volumen eines rohrförmigen Elementes 74, welches noch beschrieben wird, entspricht etwa dem Volumen des Innenraumes 23. In den Innenraum 23 des Wasserkastens 2' gelangendes Schwallwasser wird auf zwei unterschiedliche Arten von der Luft getrennt.

Um die erste Art der Trennung von Schwallwasser und Luft zu bewerkstelligen, weist der Wasserkasten 2' eine Wasservorabscheidestruktur auf zum Vorabscheiden von durch den Hohlraum 33 der trichterförmigen Leitung 3' hindurchströmendem Wasser aus dem Hohlraum 33 bevor dieses Wasser aus der Luftaustrittsöffnung 32 der trichterförmigen Leitung 3' in den Teilbereich 230 des Innenraumes 23 austreten kann. Die Wasservorabscheidestruktur umfasst einen im Innenraum 23 angeordneten Abschnitt 7 einer Wandung 38 der trichterförmigen Leitung 3', welcher den Hohlraum 33 der trichterförmigen Leitung 3' begrenzt, wobei der Abschnitt 7 eine Wasserausgangsöffnung 70 bildet zum Abscheiden von durch den Hohlraum 33 der trichterförmigen Leitung 3' hindurchströmendem Wasser aus dem Hohlraum 33. Zudem umfasst die Wasservorabscheidestruktur, zusätzlich zum genannten Abschnitt 7 der Wandung 38, eine rohrförmige Leitung 71 mit einer Wassereintrittsöffnung 72 sowie einer Wasseraustrittsöffnung 73, wobei die Wassereintrittsöffnung 72 mit der Wasserausgangsöffnung 70 verbunden ist zum Ableiten von Wasser aus dem Hohlraum 33 der trichterförmigen Leitung 3' in die rohrförmige Leitung 71. Die Wasservorabscheidestruktur kann ein nicht dargestelltes an der Wasserausgangsöffnung 70 angeordnetes Verschlussmittel aufweisen zum Versperren und Freigeben der Wasserausgangsöffnung 70. Die rohrförmige Leitung 71 wird durch ein rohrförmiges Element 74 mit einer Zunge 75, sowie einem Teilabschnitt 251 der Seitenwandung 25 sowie dem Teilabschnitt 241 der Bodenwandung 24 gebildet. Das rohrförmige Element 74 bildet den im Innenraum 23 angeordneten Abschnitt der rohrförmigen Leitung 71. Ausserhalb des Innenraumes 23 wird die rohrförmige Leitung 71 durch die Zunge 75 sowie dem Teilabschnitt 251 der Seitenwandung 25 sowie dem Teilabschnitt 241 der Bodenwandung 24 gebildet. Wie in Figur 2 ersichtlich, erstreckt sich die rohrförmige Leitung 71 durch den Innenraum 23 sowie durch die Seitenwandung 25 hindurch und entlang der Seitenwandung 25 und der Bodenwandung 24 nach unten, so dass die Wasseraustrittsöffnung 73 der rohrfömigen Leitung 71, aus welcher das Schwallwasser aus dem Wasserkasten 2' ausgeschieden werden kann, parallel und in gleicher Höhe zur in der Bodenwandung 24 angeordneten Wasserauslassöffnung 29 angeordnet ist. Die Wasservorabscheidestruktur umfasst zudem eine im Hohlraum 33 der trichterförmigen Leitung 3' angeordnete Auffang- und Ableitstruktur zum teilweise Auffangen und Ableiten von durch den Hohlraum 33 der trichterförmigen Leitung 3' hindurchströmendem Wasser in die Wasserausgangsöffnung 70. Die Auffang- und Ableitstruktur umfasst einen umlaufenden in den Hohlraum 33 sich hineinerstreckenden Kragen 78 sowie einen Abschnitt 76 der Wandung 38 der trichterförmigen Leitung 3'. Wie in Figur 2 ersichtlich, bildet der Kragen 78 mit dem Abschnitt 76 der Wandung 38 zusammen eine gegenüber der Lufteinlassöffnung 21 beziehungsweise Lufteintrittsöffnung 31 offene Vertiefung 77 in welcher beispielsweise gemäss Pfeil 65 in den Innenraum 23 beziehungsweise in den Hohlraum 33 einströmendes Schwallwasser aufgefangen und zur Wasserausgangsöffnung 70 hingeleitet werden kann. Mittels der beschriebenen Wasservorabscheidestruktur kann Wasser aus dem Hohlraum 33 abgeleitet werden und örtlich gezielt ausserhalb des Wasserkastens 2' abgeschieden werden.

Die zweite Art der Trennung von Schwallwasser und Luft wird bewerkstelligt, indem über die Wasserauslassöffnung 29 gemäss Pfeil 61 das über die trichterförmige Leitung 3' in den Innenraum 23 eingeströmte Schwallwasser über die Wasserauslassöffnung 29 aus dem Innenraum 23 abgeschieden wird.

Zudem ist der Wasserkasten 2' gemäss Figur 2 geeignet, aus durch den Innenraum 23 hindurchströmenden und Wasser enthaltenden Luft Wasser, insbesondere tropfenförmiges Wasser, abzuscheiden.
Die, wie beispielsweise mit dem Pfeil 6 angedeutet, in die trichterförmige Leitung 3' einströmende und dann in den Teilbereich 230 des Innenraumes 23 gelangende und mit Wasser, insbesondere mit tropfenförmigem Wasser, beladene Luft wird von dem in der Luft vorhandenen Wasser, insbesondere tropfenförmigen Wasser, getrennt aufgrund der bereits erläuterten relativen Lage der untersten, kreisförmigen Kante 35 der Luftaustrittsöffnung 32 der trichterförmigen Leitung 3' zur untersten Kante 28 der Luftauslassöffnung 22 des Wasserkastens 2' . Das aus der Luft abgeschiedene Wasser wird wiederum, wie beispielsweise mit Pfeil 61 angedeutet, durch die Wasserauslassöffnung 29 aus dem Innenraum 23 beziehungsweise aus dem Teilbereich 230 des Innenraumes 23 des Wasserkastens 2' und somit aus dem Wasserkasten 2' abgeschieden. Die auf die beschriebene Art zumindest teilweise wasserreduzierte Luft verlässt dann über die Luftauslassöffnung 22 sowie den an die Luftauslassöffnung 22 unmittelbar anschliessenden Durchbruch 200 den Wasserkasten 2'.

Beim Wasserkasten 2' gemäss Figur 2 ist die Luftaustrittsöffnung 32 der trichterförmigen Leitung 3' relativ zur Luftauslassöffnung 22 des Wasserkastens 2' derart angeordnet, dass die Strömungsrichtung der Luft, welche senkrecht zur Querschnittsfläche 39 der Luftaustrittsöffnung 32 aus der Luftaustrittöffnung 32 der trichterförmigen Leitung 3' austritt, in einem Winkel α von 90° zur Strömungsrichtung der Luft, welche senkrecht zur Querschnittsfläche 250 der Luftauslassöffnung 22 des Wasserkastens 2' in die Luftauslassöffnung 22 eintritt, ist.

Im Innenraum 23 des Wasserkastens 2' ist zudem eine Wasserabweiservorrichtung in der Form eines umlaufenden und in den Innenraum 23 beziehungsweise in den Teilbereich 230 des Innenraumes 23 sich hineinerstreckenden Kragens 8 angeordnet. Der Kragen 8 hat die Funktion, zu Verhindern, dass Wasser, insbesondere Schwallwasser und / oder tropfenförmiges Wasser, entlang der Bodenwandung 24 und der Seitenwandung 25, wie beispielsweise mit dem Pfeil 60 angedeutet, in Richtung der Luftauslassöffnung 22 des Wasserkastens 2' strömen und den Wasserkasten 2' über die Luftauslassöffnung 22 verlassen kann, wie beispielsweise in Richtung einer Klimaanlage. In Luft enthaltenes Wasser, insbesondere tropfenförmiges Wasser, führt beispielsweise zur Verpilzung von in der Klimaanlage angeordneten Filtern. Bei der Ausführungsform gemäss Figur 2 ist der Kragen 8 einstückig mit der Seitenwandung 25 verbunden.

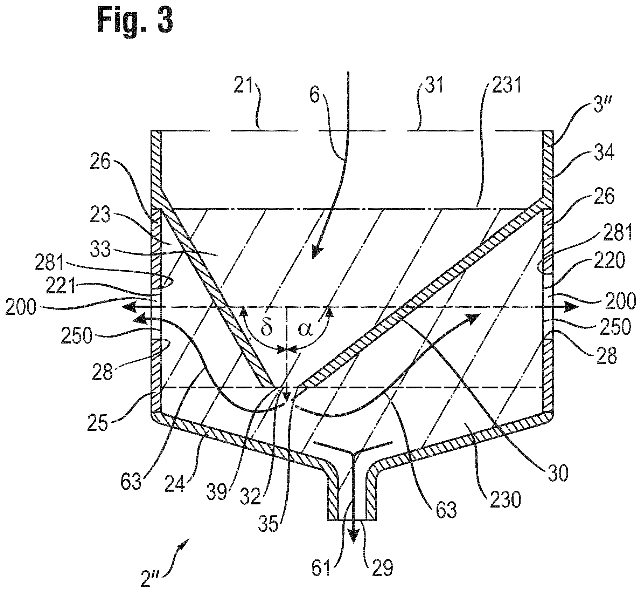

Fig.3 offenbart schematisch eine dritte Ausführungsform des erfindungsgemässen Wasserkastens. Der in Figur 3 gezeigte Wasserkasten 2" umfasst einen Innenraum 23, welcher mit strichpunktierten Linien schraffiert ist, eine kreisförmige Lufteinlassöffnung 21 zum Zuführen von Luft in den Innenraum 23, welche mit einer gestrichelten Linie angedeutet ist, sowie, im Gegensatz zu den Wasserkästen gemäss den Figuren 1 und 2, zwei Luftauslassöffnungen, beziehungsweise eine kreisförmige erste Luftauslassöffnung 220 sowie eine kreisförmige zweite Luftauslassöffnung 221 zum Abführen von Luft aus dem Innenraum 23. Der Wasserkasten 2" weist zudem eine als konischen Hohlkörper ausgebildete Bodenwandung 24 und eine als zylinderförmigen Hohlkörper ausgebildete Seitenwandung 25 auf, welche umlaufend an der Bodenwandung 24 befestigt ist und sich nach oben erstreckt. Die kreisförmige erste Luftauslassöffnung 220 sowie die kreisförmige zweite Luftauslassöffnung 221 sind in der Seitenwandung 25 angeordnet und weisen je eine unterste Kante 28 sowie eine oberste Kante 281 auf. In der Seitenwandung 25 sind zwei Durchbrüche 200 angeordnet. Der erste Durchbruch 200 schliesst unmittelbar an die erste Luftauslassöffnung 220 an und erstreckt sich durch die Seitenwandung 25. Der zweite Durchbruch 200 schliesst unmittelbar an die zweite Luftauslassöffnung 221 an und erstreckt sich durch die Seitenwandung 25. Wie in Figur 3 ersichtlich, werden die Luftauslassöffnungen 220 und 221 durch die Seitenwandung 25 gebildet. Die Seitenwandung 25 weist einen obersten, umlaufenden Rand 26 auf. Die Luftauslassöffnungen 220 und 221 sind einander gegenüberliegend in der Seitenwandung 25 angeordnet. Die Bodenwandung 24 und die Seitenwandung 25 begrenzen gemeinsam den Innenraum 23. Die Begrenzung des Innenraumes 23 nach oben ist mit einer strichpunktierten Linie 231 gekennzeichnet. Des weiteren weist der Wasserkasten 2" eine Luftleitstruktur, welche als trichterförmige Leitung 3" ausgebildet ist, auf. Die trichterförmige Leitung 3" umfasst eine kreisförmige Lufteintrittsöffnung 31 sowie eine kreisförmige Luftaustrittsöffnung 32, wobei die Lufteintrittöffnung 31 mit der Luftaustrittsöffnung 32 über einen Hohlraum 33 miteinander verbunden sind. Wie in Figur 3 sichtbar, bildet die Lufteintrittsöffnung 31 der trichterförmigen Leitung 3' die Lufteinlassöffnung 21 des Wasserkastens 2". Ein oberster, umlaufender Rand 26 der Seitenwandung 25 ist luftdicht, lösbar oder luftdicht, unlösbar an der trichterförmigen Leitung 3" befestigt. Zudem ist in Figur 3 ersichtlich, dass die Lufteinlassöffnung 21 oberhalb des obersten Randes 26 angeordnet ist. Bevorzugt ist der oberste Rand 26 der Seitenwandung 25 luftdicht, lösbar an der trichterförmigen Leitung 3" befestigt, beispielsweise mittels einer Rastverbindung, da sich hierdurch der Innenraum 24 des Wasserkastens 2" leichter warten und reinigen lässt. Zudem kann ein allfällig im Innenraum 23 angeordneter Filter, wie noch beschrieben wird, leichter gewartet und ausgetauscht werden. Die trichterförmige Leitung 3" weist einen ersten Abschnitt 34 umfassend die Lufteintrittsöffnung 31 beziehungsweise die Lufteinlassöffnung 21 und einen zweiten Abschnitt 30 umfassend die Luftaustrittsöffnung 32 auf. Wie in Figur 3 ersichtlich, sind somit der erste Abschnitt 34, und daher auch die Lufteintrittsöffnung 31 beziehungsweise die Lufteinlassöffnung 21 ausserhalb des Innenraums 23 angeordnet und der zweite Abschnitt 30, und daher auch die Luftaustrittsöffnung 32, im Innenraum 32 angeordnet. Die trichterförmige Leitung 3" erstreckt sich somit in den Innenraum 23 beziehungsweise ist teilweise im Innenraum 23 angeordnet. Wie in Figur 3 ersichtlich, ist die Luftaustrittsöffnung 32 der trichterförmigen Leitung 3" zur Bodenwandung 24 hin gerichtet. Der im Innenraum 23 angeordnete zweite Abschnitt 30 der trichterförmigen Leitung 3" ist unmittelbar benachbart zur Seitenwandung 25 angeordnet sowie im Wesentlichen vollständig von der Bodenwandung 24 und der Seitenwandung 25 beabstandet. Die trichterförmige Leitung 3" ist im Wesentlichen und nicht vollständig von der Seitenwandung 25 und der Bodenwandung 24 beabstandet, da die trichterförmige Leitung 3", wie bereits beschrieben, am obersten Rand 26 der Seitenwandung 25 befestigt ist. Die im Wesentlichen vollständige Beabstandung der trichterförmigen Leitung 3" von der Bodenwandung 24 und der Seitenwandung 25 bewirkt den Vorteil, dass der erfindungsgemässe Wasserkasten 2" einen grösseren Freiheitsgrad für die Positionierung der Luftauslassöffnungen 220, 221 aufweist als Wasserkästen des Standes der Technik. Der grössere Freiheitsgrad bei der Positionierung der Luftauslassöffnungen 220, 221 bewirkt wiederum den Vorteil, dass der erfindungsgemässe Wasserkasten 2" freier positioniert werden kann in einem Innenraum, insbesondere in einem Motorraum eines Kraftfahrzeuges, als Wasserkästen des Standes der Technik. Die Anordnung der trichterförmigen Leitung 3" unmittelbar benachbart zur Seitenwandung 25 bewirkt den Vorteil, dass die Lufteinlassöffnung 21 und die Luftauslassöffnungen 220, 221 des erfindungsgemässen Wasserkastens 2" vergleichsweise näher relativ zueinander angeordnet sind als die Lufteinlassöffnung und die Luftauslassöffnungen von Wasserkästen des Standes der Technik.

Wie schon dargelegt, sind die Luftauslassöffnungen 220 und 221 kreisförmig ausgebildet. Die Luftaustrittsöffnung 32 liegt, analog zur Luftaustrittsöffnung 32 des Wasserkastens 2' gemäss Figur 2, in einer horizontalen, planaren Ebene. Somit existiert für die Luftaustrittsöffnung 32 ausschliesslich eine unterste Kante 35 welche dieselbe Kreisform aufweist wie die Luftaustrittsöffnung 32. In Figur 3 ist ersichtlich, dass die unterste Kante 35 der Luftaustrittsöffnung 32 der trichterförmigen Leitung 3" unterhalb der untersten Kante 28 der Luftauslassöffnungen 220, 221 des Wasserkastens 2" angeordnet ist, wie dies anhand der gestrichelten, horizontal sich von unterste Kante 35 der Luftaustrittsöffnung 32 zur Seitenwandung 25 erstreckenden Linie erkennbar ist. Dies bewirkt den Vorteil, dass Luft, welche über die Lufteinlassöffnung 21 des Wasserkastens 2" beziehungsweise über die Lufteintrittsöffnung 31 der trichterförmigen Leitung 3" in den Innenraum 23 hineinströmt, und wieder über die Luftauslassöffnungen 220, 221 des Wasserkastens 2" aus dem Innenraum 23 herausströmt, beispielsweise eine Umlenkung, wie mit den beiden Pfeilen 63 angedeutet, erfährt. Durch diese Umlenkung wird in der Luft enthaltenes Wasser, insbesondere tropfenförmiges Wasser, aus der durch den Innenraum 23 hindurchströmenden Luft abgeschieden. Der Wasserkasten 2" weist zusätzlich eine an der tiefsten Stelle der Bodenwandung 24 angeordnete Wasserauslassöffnung 29 auf zum Abführen von Wasser aus dem Innenraum 23. Die Wasserauslassöffnung 29 wird beim Wasserkasten 2" gemäss Figur 3 durch die Bodenwandung 24 gebildet. Die Wasserauslassöffnung 29 ist unterhalb der Luftaustrittsöffnung 32 und versetzt zur Luftaustrittsöffnung 32 angeordnet.

Der erfindungsgemässe Wasserkasten 2" gemäss Figur 3 ist geeignet, Luft und Wasser im Innenraum 23 voneinander zu trennen. Schwallwasser, wie beispielsweise Regenwasser oder Wasser einer Kraftfahrzeugwaschanlage, sowie mit Wasser, insbesondere tropfenförmigem Wasser, beladene Luft können über die Lufteinlassöffnung 21 des Wasserkastens 2" beziehungsweise die Lufteintrittsöffnung 31 der trichterförmigen Leitung 3", welche die Lufteinlassöffnung 21 bildet, in den Hohlraum 33 der trichterförmigen Leitung 3" gelangen und den Hohlraum 33 über die Luftaustrittsöffnung 32 in einen Teilbereich 230 des Innenraumes 23 wieder verlassen, welcher mit der Wasserauslassöffnung 29 sowie den Luftauslassöffnungen 220, 221 verbunden ist. Die Summe aus dem Volumen des Teilbereiches 230 sowie dem Volumen des Hohlraumes 33 entspricht etwa dem Volumen des Innenraumes 23. In den Innenraum 23 des Wasserkastens 2" nach Figur 3 gelangendes Schwallwasser wird von der Luft getrennt, indem über die Wasserauslassöffnung 29 gemäss Pfeil 61 das über die trichterförmige Leitung 3" in den Innenraum 23 eingeströmte Schwallwasser über die Wasserauslassöffnung 29 aus dem Innenraum 23 abgeschieden wird. Zudem ist der Wasserkasten 2" gemäss Figur 3 auch geeignet, aus durch den Innenraum 23 hindurchströmenden und Wasser enthaltenden Luft Wasser, insbesondere tropfenförmiges Wasser, abzuscheiden. Die, wie beispielsweise mit dem Pfeil 6 angedeutet, in die trichterförmige Leitung 3" einströmende und dann in den Teilbereich 230 des Innenraumes 23 gelangende und mit Wasser, insbesondere mit tropfenförmigem Wasser, beladene Luft wird von dem in der Luft vorhandenen Wasser, insbesondere tropfenförmigen Wasser, getrennt aufgrund der bereits erläuterten relativen Lage der untersten Kante 35 der Luftaustrittsöffnung 32 der trichterförmigen Leitung 3" zur untersten Kante 28 der Luftauslassöffnungen 220, 221 des Wasserkastens 2". Das aus der Luft abgeschiedene Wasser wird wiederum, wie beispielsweise mit Pfeil 61 angedeutet, durch die Wasserauslassöffnung 29 aus dem Innenraum 23 beziehungsweise aus dem Teilbereich 230 des Innenraumes 23 des Wasserkastens 2" und somit aus dem Wasserkasten 2" abgeschieden. Die auf die beschriebene Art zumindest teilweise wasserreduzierte Luft verlässt dann über die erste Luftauslassöffnung 220 und den ersten Durchbruch 200, welcher unmittelbar an die erste Luftauslassöffnung 220 anschliesst, sowie über die zweite Luftauslassöffnung 221 und den zweiten Durchbruch 200, welcher unmittelbar an die zweite Luftauslassöffnung 221 anschliesst, den Innenraum 23 beziehungsweise den Wasserkasten 2".

Beim Wasserkasten 2" gemäss Figur 3 ist die Luftaustrittsöffnung 32 der trichterförmigen Leitung 3" relativ zur ersten Luftauslassöffnung 220 des Wasserkastens 2" derart angeordnet, dass die Strömungsrichtung der Luft, welche senkrecht zur Querschnittsfläche 39 der Luftaustrittsöffnung 32 aus der Luftaustrittöffnung 32 der trichterförmigen Leitung 3" austritt, in einem Winkel α von 90° zur Strömungsrichtung der Luft, welche senkrecht zur Querschnittsfläche 250 der ersten Luftauslassöffnung 220 des Wasserkastens 2" in die erste Luftauslassöffnung 220 eintritt, ist. Beim Wasserkasten 2" gemäss Figur 3 ist zudem die Luftaustrittsöffnung 32 der trichterförmigen Leitung 3" relativ zur zweiten Luftauslassöffnung 221 des Wasserkastens 2" derart angeordnet, dass die Strömungsrichtung der Luft, welche senkrecht zur Querschnittsfläche 39 der Luftaustrittsöffnung 32 aus der Luftaustrittöffnung 32 der trichterförmigen Leitung 3" austritt, in einem Winkel δ von 90° zur Strömungsrichtung der Luft, welche senkrecht zur Querschnittsfläche 250 der zweiten Luftauslassöffnung 221 des Wasserkastens 2" in die zweite Luftauslassöffnung 221 eintritt, ist.

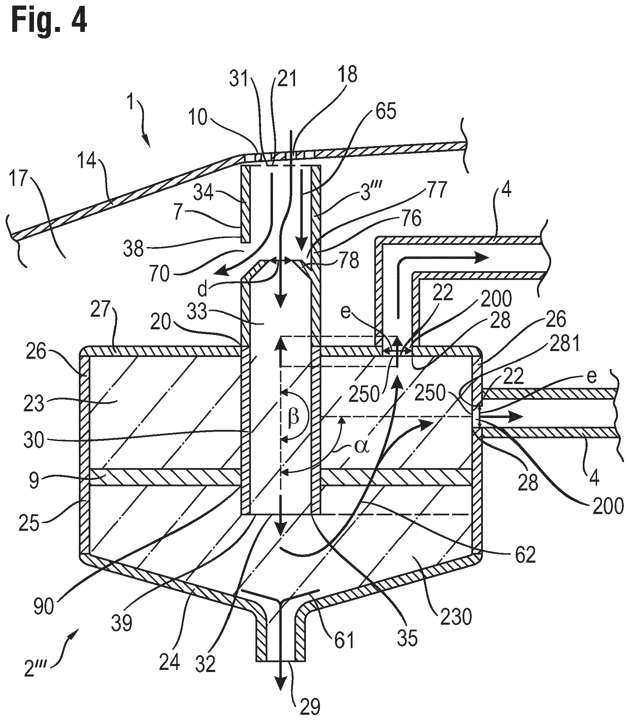

Fig.4 offenbart schematisch einen Teilbereich des Schnittes durch das Kraftfahrzeug gemäss Fig.1. Der in Figur 4 gezeigte Teilbereich des Schnittes durch das Kraftfahrzeug gemäss Fig.1 zeigt einen Bereich der Motorhaube 14 sowie die genannte vierte Ausführungsform des erfindungsgemässen Wasserkastens. Die Motorhaube 14 weist den Durchgang 18 auf, welcher durch ein Gitter 10 abgedeckt ist. Unterhalb der Motorhaube 14 beziehungsweise im Motorraum 17 ist der erfindungsgemässe Wasserkasten 2"' angeordnet. Der Wasserkasten 2"' umfasst einen Innenraum 23, welcher mit strichpunktierten Linien schraffiert ist, eine kreisförmige Lufteinlassöffnung 21 zum Zuführen von Luft in den Innenraum 23, welche mit einer gestrichelten Linie angedeutet ist, sowie zwei kreisförmige Luftauslassöffnungen 22 zum Abführen von Luft aus dem Innenraum 23, eine als konischen Hohlkörper ausgebildete Bodenwandung 24 und eine als zylindrischen Hohlkörper ausgebildete Seitenwandung 25 auf, welche umlaufend an der Bodenwandung 24 befestigt ist und sich nach oben erstreckt. Eine erste Luftauslassöffnung 22 ist in der Seitenwandung 25 und eine zweite Luftauslassöffnung 22 in der Deckenwandung 27 angeordnet. Die in der Seitenwandung 25 angeordnete kreisförmige erste Luftauslassöffnung 22 weist eine unterste Kante 28 sowie eine oberste Kante 281 auf. Die in der Deckenwandung 27 angeordnete zweite Luftauslassöffnung 22 liegt in einer horizontalen, planaren Ebene. Somit existiert für die zweite Luftauslassöffnung 22 ausschliesslich eine unterste Kante 28 welche dieselbe Kreisform aufweist wie die zweite Luftauslassöffnung 22. Die Bodenwandung 24 ist luftdicht, lösbar oder luftdicht, unlösbar an der Seitenwandung 25 befestigt. Aus Dichtigkeitsgründen bezüglich Wasser und Luft ist die Bodenwandung 24 bevorzugt luftdicht, unlösbar an der Seitenwandung 25 befestigt. Die luftdicht, unlösbar aneinander befestigte Bodenwandung 24 und Seitenwandung 25 sind beispielsweise einstückig miteinander verbunden. Die Seitenwandung 25 weist einen obersten, umlaufenden Rand 26 auf, an welchem eine Deckenwandung 27 befestigt ist. Wie in Figur 4 ersichtlich, ist die Lufteinlassöffnung 21 oberhalb des obersten Randes 26 angeordnet. Die Seitenwandung 25 ist luftdicht, lösbar oder luftdicht, unlösbar an der Deckenwandung 27 befestigt. Bevorzugt ist der oberste Rand 26 der Seitenwandung 25 luftdicht, lösbar an der Deckenwandung 27 befestigt, beispielsweise mittels einer Rastverbindung, da sich hierdurch der Innenraum 23 des Wasserkastens 2"' leichter warten und reinigen lässt. Die Bodenwandung 24, die Seitenwandung 25 sowie die Deckenwandung 27 begrenzen gemeinsam den Innenraum 23. Der Wasserkasten 2''' weist zudem eine Luftleitstruktur, welche als nicht gebogene rohrförmige Leitung 3'" beziehungsweise als eine sich linear erstreckende rohrförmige Leitung 3'" ausgebildet ist, mit einer Lufteintrittsöffnung 31 sowie einer Luftaustrittsöffnung 32 auf, wobei die Lufteintrittsöffnung 31 mit der Luftaustrittsöffnung 32 über einen Hohlraum 33 miteinander verbunden sind. Die Luftaustrittsöffnung 32 liegt in einer horizontalen, planaren Ebene. Somit existiert für die Luftaustrittsöffnung 32 ausschliesslich eine unterste Kante 35 welche dieselbe Kreisform aufweist wie die Luftaustrittsöffnung 32. Die rohrförmige Leitung 3"' erstreckt sich durch einen Durchbruch 20 in der Deckenwandung 27 und weist einen ersten Abschnitt 34 umfassend die Lufteintrittsöffnung 31 beziehungsweise die Lufteinlassöffnung 21 und einen zweiten Abschnitt 30 umfassend die Luftaustrittsöffnung 32 auf. Wie in Figur 4 ersichtlich, sind somit der erste Abschnitt 34, und daher auch die Lufteintrittsöffnung 31 beziehungsweise die Lufteinlassöffnung 21 ausserhalb des Innenraums 23 angeordnet und der zweite Abschnitt 30, und daher auch die Luftaustrittsöffnung 32, im Innenraum 23 angeordnet. Wie in Figur 4 ersichtlich, ist die Lufteinlassöffnung 21, die Luftaustrittsöffnung 32, die rohrförmige Leitung 3'" sowie der zweite Abschnitt 30 mittig bezüglich der umlaufenden Seitenwandung 25 angeordnet. Der mittels des Gitters 10 abgedeckte Durchgang 18 in der Motorhaube 14 ist unmittelbar mit der Lufteintrittsöffnung 31 der rohrförmige Leitung 3"' verbunden zum Zuführen von Luft ausserhalb des Kraftfahrzeuges 1 in den Hohlraum 33 der rohrförmigen Leitung 3"'. Das Gitter 10 verhindert beispielsweise den Eintritt von Laub oder anderen flächigen Verunreinigungen in den Hohlraum 33 der rohrförmigen Leitung 3"'.

Wie in Figur 4 ersichtlich, ist die Luftaustrittsöffnung 32 der rohrförmigen Leitung 3"' zur Bodenwandung 24 hin gerichtet. Der im Innenraum 23 des Wasserkastens 2"' angeordnete zweite Abschnitt 30 der rohrförmigen Leitung 3'" ist unmittelbar benachbart zur Seitenwandung 25 angeordnet sowie vollständig von der Bodenwandung 24 und der Seitenwandung 25 beabstandet. Die vollständig Beabstandung des zweiten Abschnittes 30 von der Bodenwandung 24 und der Seitenwandung 25 bewirkt den Vorteil, dass der erfindungsgemässe Wasserkasten 2"' einen grösseren Freiheitsgrad für die Positionierung der Luftauslassöffnungen 22 aufweist als Wasserkästen des Standes der Technik. Der grössere Freiheitsgrad bei der Positionierung der Luftauslassöffnungen 22 bewirkt wiederum den Vorteil, dass der erfindungsgemässe Wasserkasten 2"' freier positioniert werden kann in einem Innenraum, insbesondere in einem Motorraum eines Kraftfahrzeuges, als Wasserkästen des Standes der Technik. Die Anordnung des zweiten Abschnittes 30 der rohrförmigen Leitung 3"' unmittelbar benachbart zur Seitenwandung 25 bewirkt den Vorteil, dass die Lufteinlassöffnung 21 und die Luftauslassöffnungen 22 des erfindungsgemässen Wasserkastens 2"' vergleichsweise näher relativ zueinander angeordnet sind als die Lufteinlassöffnung und die Luftauslassöffnungen von Wasserkästen des Standes der Technik. Wie in Figur 4 ersichtlich, ist die kreisförmige, unterste Kante 35 der Luftaustrittsöffnung 32 unterhalb der untersten Kante 28 der in der Seitenwandung 35 angeordneten kreisförmigen, ersten Luftauslassöffnung 22 sowie unterhalb der kreisförmigen, untersten Kante 28 der in der Deckenwandung 27 angeordneten kreisförmigen, zweiten Luftauslassöffnung 22 angeordnet. Dies bewirkt den Vorteil, dass Luft, welche über die Lufteinlassöffnung 21 des Wasserkastens 2"' beziehungsweise über die Lufteintrittsöffnung 31 der rohrförmigen Leitung 3"' in den Innenraum 23 hineinströmt, und wieder über die Luftauslassöffnungen 22 des Wasserkastens 2"' aus dem Innenraum 23 herausströmt, beispielsweise eine Umlenkung, wie mit Pfeil 62 angedeutet, erfährt. Durch diese Umlenkung wird in der Luft enthaltenes Wasser, insbesondere tropfenförmiges Wasser, aus der durch den Innenraum 23 hindurchströmenden Luft abgeschieden. Beim Wasserkasten 2"' gemäss Figur 4 ist die Luftaustrittsöffnung 32 der rohrförmigen Leitung 3"' relativ zur ersten Luftauslassöffnung 22 des Wasserkastens 2"' derart angeordnet, dass die Strömungsrichtung der Luft, welche senkrecht zur Querschnittsfläche 39 der Luftaustrittsöffnung 32 aus der Luftaustrittsöffnung 32 der rohrförmigen Leitung 3"' austritt, in einem Winkel α von 90° zur Strömungsrichtung der Luft, welche senkrecht zur Querschnittsfläche 250 der ersten Luftauslassöffnung 22 des Wasserkastens 2"' in die erste Luftauslassöffnung 22 eintritt, ist. Beim Wasserkasten 2"' gemäss Figur 4 ist die Luftaustrittsöffnung 32 der rohrförmigen Leitung 3"' zudem relativ zur zweiten Luftauslassöffnung 22 des Wasserkastens 2"' derart angeordnet, dass die Strömungsrichtung der Luft, welche senkrecht zur Querschnittsfläche 39 der Luftaustrittsöffnung 32 aus der Luftaustrittsöffnung 32 der rohrförmigen Leitung 3"' austritt, in einem Winkel β von 180° zur Strömungsrichtung der Luft, welche senkrecht zur Querschnittsfläche 250 der zweiten Luftauslassöffnung 22 des Wasserkastens 2"' in die zweite Luftauslassöffnung 22 eintritt, ist. Der Wasserkasten 2'" weist zusätzlich eine an der tiefsten Stelle der Bodenwandung 24 angeordnete Wasserauslassöffnung 29 auf zum Abführen von Wasser aus dem Innenraum 23. Die Wasserauslassöffnung 29 wird durch ein nicht dargestelltes Ventil gebildet, welches die Wasserauslassöffnung 29 versperren und die versperrte Wasserauslassöffnung 29 wieder freigeben kann.

Der Innenraum 23 des Wasserkasten 2"' ist über die in der Seitenwandung 25 angeordnete kreisförmige, erste Luftauslassöffnung 22 sowie den Durchbruch 200, welcher unmittelbar an die erste Luftauslassöffnung 22 anschliesst, mit einer Luftabführleitung 4 verbunden, so dass Luft aus dem Innenraum 23 in die Luftabführleitung 4 strömen kann. Analog ist der Innenraum 23 über die in der Deckenwandung 27 angeordnete kreisförmige, zweite Luftauslassöffnung 22 sowie den Durchbruch 200, welcher unmittelbar an die zweite Luftauslassöffnung 22 anschliesst, mit einer weiteren Luftabführleitung 4 verbunden, so dass Luft aus dem Innenraum 23 in die Luftabführleitung 4 strömen kann.

Beim erfindungsgemässen Wasserkasten 2"' entspricht der kleinste Strömungsquerschnitt d der rohrförmigen Leitung 3'" im Wesentlichen dem kleinsten Strömungsquerschnitt e in einem Raum bestehend aus dem Innenraum 23 und den Luftauslassöffnungen 22. Dies bewirkt den Vorteil, dass die Druckdifferenz zwischen dem Druck der Luft im Bereich der Lufteinlassöffnung 21 beziehungsweise der Lufteintrittsöffnung 31 des Wasserkastens 2"' und dem Druck der Luft im Bereich der Luftauslassöffnungen 22 des Wasserkastens 2"' gering gehalten werden kann.

Im Innenraum 23 des Wasserkastens 2"' ist ein Filter 9 angeordnet. Der Filter 9 ist derart angeordnet und weist eine derartige Erstreckung auf, dass die aus der Luftaustrittsöffnung 32 der rohrförmigen Leitung 3"' austretende Luft durch den Filter 9 hindurchströmen muss, bevor die Luft die Luftauslassöffnungen 22 des Wasserkastens 2"' verlassen kann. Wie in Figur 4 dargestellt, ist der plattenförmig ausgestaltete Filter 9 oberhalb der untersten Kante 35 der Luftaustrittsöffnung 32 der rohrförmigen Leitung 3"' angeordnet und weist eine Perforation 90 auf durch welche die rohrförmige Leitung 3'" sich hindurcherstreckt.

Der erfindungsgemässe Wasserkasten 2"' nach Figur 4 ist geeignet, Luft und Wasser im Innenraum 23 sowie ausserhalb des Innenraumes 23 voneinander zu trennen. Schwallwasser, wie beispielsweise Regenwasser oder Wasser einer Kraftfahrzeugwaschanlage, sowie mit Wasser, insbesondere tropfenförmigem Wasser, beladene Luft können über den Durchgang 18 in der Motorhaube 14 sowie der Lufteinlassöffnung 21 des Wasserkastens 2"' beziehungsweise der Lufteintrittsöffnung 31 der rohrförmigen Leitung 3'", welche die Lufteinlassöffnung 21 bildet, in den Hohlraum 33 der rohrförmigen Leitung 3'" gelangen und den Hohlraum 33 über die Luftaustrittsöffnung 32 in einen Teilbereich 230 des Innenraumes 23 wieder verlassen, welcher mit der Wasserauslassöffnung 29 sowie den Luftauslassöffnungen 22 verbunden ist. In den Innenraum 23, beziehungsweise in den Teilbereich 230 des Innenraumes 23, gelangendes Schwallwasser wird von der Luft getrennt, indem über die Wasserauslassöffnung 29 gemäss Pfeil 61 das Schwallwasser aus dem Innenraum 23 abgeschieden wird. In den Innenraum 23, beziehungsweise in den Teilbereich 230 des Innenraumes 23, gelangende und mit Wasser, insbesondere mit tropfenförmigem Wasser, beladene Luft wird von dem in der Luft vorhandenen Wasser, insbesondere tropfenförmigen Wasser, getrennt, da die aus der Luftaustrittsöffnung 32 austretende Luft, aufgrund der bereits erläuterten relativen Lage der kreisförmigen, untersten Kante 35 der Luftaustrittsöffnung 32 zur untersten Kante 28 der in der Seitenwandung 35 angeordneten kreisförmigen, ersten Luftauslassöffnung 22 sowie zur kreisförmigen, untersten Kante 28 der in der Deckenwandung 27 angeordneten kreisförmigen, zweiten Luftauslassöffnung 22. Das abgetrennte Wasser wird wiederum gemäss Pfeil 61 durch die Wasserauslassöffnung 29 aus dem Innenraum 23 des Wasserkastens 2"' beziehungsweise aus dem Wasserkasten 2"' abgeschieden. Die auf die beschriebene Art zumindest teilweise wasserreduzierte Luft verlässt dann über die in der Seitenwandung 25 angeordnete kreisförmige, erste Luftauslassöffnung 22 und den an die erste Luftauslassöffnung 22 unmittelbar anschliessenden Durchbruch 200 sowie die in der Deckenwandung 27 angeordnete kreisförmige, zweite Luftauslassöffnung 22 und den an die zweite Luftauslassöffnung 22 unmittelbar anschliessenden Durchbruch 200 den Innenraum 23 beziehungsweise den Wasserkasten 2"'.

Der Wasserkasten 2"' weist eine Wasservorabscheidestruktur auf zum Vorabscheiden von durch den Hohlraum 33 der rohrförmigen Leitung 3"' hindurchströmendem Wasser aus dem Hohlraum 33 bevor dieses Wasser aus der Luftaustrittsöffnung 32 der rohrförmigen Leitung 3"' in den Teilbereich 230 des Innenraumes 23 austreten kann. Die Wasservorabscheidestruktur umfasst einen im Innenraum 23 angeordneten Abschnitt 7 einer Wandung 38 der rohrförmigen Leitung 3"', welcher den Hohlraum 33 der rohrförmigen Leitung 3'" begrenzt, wobei der Abschnitt 7 die Wasserausgangsöffnung 70 bildet zum Abscheiden von durch den Hohlraum 33 der rohrförmigen Leitung 3'" hindurchströmendem Wasser aus dem Hohlraum 33. Die Wasservorabscheidestruktur umfasst zudem eine im Hohlraum 33 der rohrförmigen Leitung 3"' angeordnete Auffang- und Ableitstruktur zum teilweise Auffangen und Ableiten von durch den Hohlraum 33 der rohrförmigen Leitung 3"' hindurchströmendem Wasser in die Wasserausgangsöffnung 70. Die Auffang- und Ableitstruktur umfasst einen umlaufenden in den Hohlraum 33 sich hineinerstreckenden Kragen 78 sowie einen Abschnitt 76 der Wandung 38 der rohrförmigen Leitung 3"'. Wie in Figur 4 ersichtlich, bildet der Kragen 78 mit dem Abschnitt 76 der Wandung 38 zusammen eine gegenüber der Lufteinlassöffnung 21 beziehungsweise Lufteintrittsöffnung 31 offene Vertiefung 77 in welche beispielsweise gemäss Pfeil 65 in den Hohlraum 33 einströmendes Schwallwasser aufgefangen und zur Wasserausgangsöffnung 70 hingeleitet wird. Mittels der beschriebenen Wasservorabscheidestruktur kann das Wasser aus dem Hohlraum 33 abgeleitet werden.

Selbstverständlich ist die hier beschriebene Erfindung nicht auf die erwähnten Ausführungsformen beschränkt und eine Vielzahl von Abwandlungen ist möglich. So können beispielsweise die Bodenwandung 24, die Seitenwandung 25 oder auch die Luftleitstruktur 3,3',3'',3"' der Wasserkästen 2,2',2",2"' gemäss den Figuren 1 bis 4 anders ausgestaltet sein. Ebenfalls kann die Deckenwandung 27 der Wasserkästen 2,2"' gemäss den Figuren 1, 4 anders ausgestaltet sein. Bei den Wasserkästen 2,2',2",2"' gemäss den Figuren 1 bis 4 können mehrere Lufteinlassöffnungen beziehungsweise mehrere Lufteintrittsöffnungen und / oder auch mehrere Luftaustrittsöffnungen vorgesehen sein. Es können selbstverständlich auch mehrere Wasserauslassöffnungen vorgesehen sein. Die Lufteinlassöffnungen 21, die Luftauslassöffnungen 22, die Lufteintrittsöffnungen 31 sowie die Luftaustrittsöffnungen 32 der Wasserkästen 2,2',2"' gemäss den Figuren 1,2,4 müssen nicht zwingend kreisförmig ausgestaltet sein und können auch eine andere Form aufweisen. Ebenso müssen die Lufteinlassöffnung 21, die Luftauslassöffnungen 220, 221, die Lufteintrittsöffnung 31 sowie die Luftaustrittsöffnung 32 des Wasserkastens 2" gemäss Figur 3 nicht zwingend kreisförmig ausgestaltet sein und können auch eine andere Form aufweisen. Die Wasserauslassöffnung 29 muss bei den Wasserkästen 2,2',2",2"' gemäss den Figuren 1 bis 4 nicht zwingend an der tiefsten Stelle der Bodenwandung 24 angeordnet sein. Die Wasserauslassöffnung 29 ist aber bevorzugt an der tiefsten Stelle der Bodenwandung 24 angeordnet, da hierdurch ein effizienter Abfluss von Wasser aus dem Innenraum 23 gewährleistet ist. Die Wasserkästen 2,2' gemäss den Figuren 1 und 2 können selbstverständlich auch mehrere Luftauslassöffnungen aufweisen. Die Luftaustrittsöffnungen 32 der Wasserkästen 2,2',2",2"' gemäss den Figuren 1 bis 4 sind zur Bodenwandung 24 hin gerichtet. Selbstverständlich können die Luftaustrittsöffnungen der erfindungsgemässen Wasserkästen auch zur Seitenwandung hin gerichtet sein. Bei mehreren Luftaustrittsöffnungen können die Luftaustrittsöffnungen ausschliesslich zur Bodenwandung oder ausschliesslich zur Seitenwandung hin gerichtet sein oder zur Bodenwandung sowie zur Seitenwandung hin gerichtet sein. Der Filter 9 des Wasserkastens 2"' gemäss der Figur 4 kann geometrisch auch anders ausgestaltet sein und die Wasserkästen 2,2',2" gemäss den Figuren 1 bis 3 können selbstverständlich auch einen Filter aufweisen. Die Wasservorabscheidestruktur der Wasserkästen 2',2"' nach den Figuren 2 und 4 kann ebenfalls auch anders ausgestaltet sein. Selbstverständlich können die Wasserkästen 2, 2" gemäss den Figuren 1 und 3 auch eine Wasservorabscheidestruktur umfassen. Die Wasserabweiservorrichtung 8 des Wasserkastens 2' gemäss Figur 2 kann auch anders ausgestaltet sein. Ebenso können die Wasserkästen 2,2",2"' gemäss den Figuren 1,3,4 auch eine Wasserabweiservorrichtung aufweisen. Die Wasserkästen 2',2",2"' gemäss den Figuren 2 bis 4 sind, wie der Wasserkasten 2 nach Figur 1, beispielsweise auch aus Kunststoff hergestellt. Der Kunststoff weist zum Beispiel mit Talkum gefülltes Polypropylen auf. Die Wasserkästen 2',2",2"' gemäss den Figuren 2 bis 4 können beispielsweise aber auch ein Bestandteil der Karosserie 12 sein und beispielsweise aus Metall hergestellt sein. Bevorzugt sind die Wasserkästen 2,2',2",2"' gemäss den Figuren 1 bis 4 aus Kunststoff hergestellt. Aus Kunststoff hergestellte Wasserkästen können einfacher hergestellt werden.

Die verschiedenen Elemente der in den Figuren 1 bis 4 gezeigten Ausführungsformen können selbstverständlich beliebig miteinander kombiniert werden. Eine Vielzahl weiterer Abwandlungen ist denkbar.

### Bezugszeichenliste

- 1: Kraftfahrzeug
- 10: Gitter
- 11: Durchlass
- 12: Karosserie
- 13: Windschutzscheibe
- 14: Motorhaube
- 15: Stirnwand
- 16: Fahrgastraum
- 17: Motorraum
- 18: Durchgang

- 2,2',2",2"': Wasserkasten
- 20: Durchbruch
- 200: Durchbruch
- 21: Lufteinlassöffnung
- 210: Querschnittsfläche der Lufteinlassöffnung 21

- 22: Luftauslassöffnung
- 220: erste Luftauslassöffnung
- 221: zweite Luftauslassöffnung
- 23: Innenraum
- 230: Teilbereich des Innenraumes 23
- 231: strichpunktierte Linie
- 232: oberste Kante des obersten Randes 26
- 233: von der obersten Kante 232 begrenzte Fläche
- 234: Teilbereich des Innenraumes 23
- 24: Bodenwandung
- 241: Teilabschnitt der Bodenwandung
- 25: Seitenwandung
- 250: Querschnittsfläche der Luftauslassöffnung 22,220,221
- 251: Teilabschnitt der Seitenwandung
- 26: oberste Rand
- 27: Deckenwandung
- 28: unterste Kante der Luftauslassöffnung 22,220,221
- 281: oberste Kante der Luftauslassöffnung 22,220,221

- 29: Wasserauslassöffnung

- 3,3"': rohrförmige Leitung
- 3',3": trichterförmige Leitung
- 30: zweiter Abschnitt
- 31: Lufteintrittsöffnung
- 32: Luftaustrittsöffnung
- 33: Hohlraum
- 34: erster Abschnitt
- 35: unterste Kante der Luftaustrittsöffnung 32
- 351: oberste Kante der Luftaustrittsöffnung 32
- 38: Wandung
- 39: Querschnittsfläche der Luftaustrittsöffnung 32
- d: Strömungsquerschnitt
- e: Strömungsquerschnitt

- 4: Luftabführleitung

- 5: Klimaanlage

- 6: Pfeil
- 60: Pfeil
- 61: Pfeil
- 62: Pfeil
- 63: Pfeil
- 64: Achse
- 65: Pfeil
- 66: Pfeil

- 7: Abschnitt der Wandung 38
- 70: Wasserausgangsöffnung
- 71: Rohrförmige Leitung
- 72: Wassereintrittsöffnung
- 73: Wasseraustrittsöffnung
- 74: Rohrförmiges Element
- 75: Zunge
- 76: Abschnitt der Wandung 38
- 77: Vertiefung
- 78: Kragen

- 8: Kragen

- 9: Filter
- 90: Perforation

- α: Winkel
- β: Winkel
- δ: Winkel

## Patentansprüche

1. Wasserkasten (2,2',2",2"') für ein Kraftfahrzeug (1) welcher geeignet ist Luft und Wasser wenigstens teilweise voneinander zu trennen, umfassend
einen Innenraum (23),
wenigstens eine Lufteinlassöffnung (21) zum Zuführen von Luft in den Innenraum (23),
wenigstens eine Luftauslassöffnung (22, 220, 221) zum Abführen von Luft aus dem Innenraum (23),
eine Bodenwandung (24) und eine Seitenwandung (25), wobei
der Innenraum (23) wenigstens von der Bodenwandung (24) sowie der Seitenwandung (25) begrenzt ist,
eine Luftleitstruktur (3,3',3",3"') mit wenigstens einer Lufteintrittsöffnung (31) sowie wenigstens einer Luftaustrittsöffnung (32), wobei
die Lufteintrittsöffnung (31) und die Luftaustrittsöffnung (32) mittels eines durch die Luftleitstruktur (3,3',3",3"') gebildeten Hohlraumes (33) miteinander verbunden sind, wobei
die Lufteintrittsöffnung (31) der Luftleitstruktur (3,3',3",3"') die Lufteinlassöffnung (21) des Wasserkastens (2,2',2",2"') bildet, wobei
wenigstens ein Abschnitt (3',30) der Luftleitstruktur (3,3',3",3"') im Innenraum (23) angeordnet ist, wobei
die Luftaustrittsöffnung (32) im Innenraum (23) angeordnet ist, wobei
die wenigstens eine Luftaustrittsöffnung (32) zur Bodenwandung (24) und / oder zur Seitenwandung (25) hin gerichtet ist, wobei
der wenigstens eine Abschnitt (3',30) der Luftleitstruktur (3,3',3",3"') welcher im Innenraum (23) angeordnet ist im Wesentlichen vollständig oder vollständig von der Bodenwandung (24) und der Seitenwandung (25) beabstandet ist, wobei
die unterste Kante (35) der Luftaustrittsöffnung (32) der Luftleitstruktur (3,3',3",3"') im Wesentlichen auf gleicher Höhe oder unterhalb der untersten Kante (28) der Luftauslassöffnung (22,220,221) des Wasserkastens (2,2',2",2"') angeordnet ist, wobei
die Seitenwandung (25) einen oberen Rand (26) aufweist, wobei die Lufteinlassöffnung (21) des Wasserkastens (2,2',2",2"') oberhalb oder innerhalb des oberen Randes (26) angeordnet ist und wobei
in der Bodenwandung (24) wenigstens eine Wasserauslassöffnung (29) zum Abführen von Wasser aus dem Innenraum (23) angeordnet ist,
**dadurch gekennzeichnet, dass** die Luftleitstruktur (3,3',3",3"') wenigstens eine rohrförmige Leitung (3,3"') und / oder wenigstens eine trichterförmige Leitung (3',3") umfasst.

2. Wasserkasten nach Anspruch 1, **dadurch gekennzeichnet, dass** der obere Rand (26) der Seitenwandung (25) an der Luftleitstruktur (3') befestigt ist.

3. Wasserkasten nach Anspruch 1, **dadurch gekennzeichnet, dass** der Wasserkasten (2,2"') zusätzlich eine Deckenwandung (27) aufweist, welche an dem oberen Rand (26) der Seitenwandung (25) befestigt ist, wobei der Innenraum (23) von der Bodenwandung (24), der Seitenwandung (25) sowie der Deckenwandung (27) begrenzt ist, wobei die Luftleitstruktur (3,3"') an der Deckenwandung (27) befestigt ist und wobei die Lufteinlassöffnung (21) innerhalb oder oberhalb der Deckenwandung (27) angeordnet ist.

4. Wasserkasten nach Anspruch 3, **dadurch gekennzeichnet, dass** die Luftauslassöffnung (22) des Wasserkastens (2,2"') in der Deckenwandung (27) angeordnet ist.

5. Wasserkasten nach einem der vorangehenden Ansprüche, **dadurch gekennzeichnet, dass** die Wasserauslassöffnung (29) unterhalb der Luftaustrittsöffnung (32) der Luftleitstruktur (3,3',3",3"') angeordnet ist.

6. Wasserkasten nach einem der vorangehenden Ansprüche, **dadurch gekennzeichnet, dass** die Wasserauslassöffnung (29) sowie die Luftaustrittsöffnung (32) der Luftleitstruktur (3,3',3''') auf einer gemeinsamen Achse (64) angeordnet sind.

7. Wasserkasten nach einem der vorangehenden Ansprüche, **dadurch gekennzeichnet, dass** die Luftaustrittsöffnung (32) der Luftleitstruktur (3',3",3"') relativ zur Luftauslassöffnung (22,220,221) des Wasserkastens (2',2",2"') derart angeordnet ist, dass die Strömungsrichtung der Luft in der Luftaustrittsöffnung (32) der Luftleitstruktur (3',3",3"') in einem Winkel (α,β,δ) von 90° bis 270°, bevorzugt in einem Winkel (α,β,δ) von 90° bis 180°, zur Strömungsrichtung der Luft in der Luftauslassöffnung (22,220,221) des Wasserkastens (2',2",2"') ist.

8. Wasserkasten nach einem der vorangehenden Ansprüche, **dadurch gekennzeichnet, dass** im Innenraum (23) und / oder an der Luftauslassöffnung (22) wenigstens ein Filter (9) angeordnet ist, wobei der Filter (9) zumindest derart angeordnet und eine derartige Erstreckung aufweist, dass die aus der Luftaustrittsöffnung (32) der Luftleitstruktur (3"') austretende Luft durch den Filter (9) hindurchströmen muss, bevor die Luft aus dem Wasserkasten (2"') herausströmen kann.

9. Wasserkasten nach einem der vorangehenden Ansprüche, **dadurch gekennzeichnet, dass** der Wasserkasten (2',2"') eine Wasservorabscheidestruktur (7,70,71,72,73,74,75,76,77,78,241,251) aufweist zum Vorabscheiden von durch den Hohlraum (33) der Luftleitstruktur (3',3''') hindurchströmendem Wasser aus dem Hohlraum (33) bevor dieses Wasser aus der Luftaustrittsöffnung (32) der Luftleitstruktur (3',3''') austreten kann.

10. Wasserkasten nach einem der vorangehenden Ansprüche, **dadurch gekennzeichnet, dass** im Innenraum (23) eine Wasserabweiservorrichtung (8) angeordnet ist zum Verhindern, dass Wasser, insbesondere Schwallwasser und / oder tropfenförmiges Wasser, entlang der Bodenwandung (24) und / oder der Seitenwandung (25) in Richtung der Luftauslassöffnung (22) des Wasserkastens (2') strömen kann.

11. Wasserkasten nach einem der vorangehenden Ansprüche, **dadurch gekennzeichnet, dass** die Luftauslassöffnung (22,220,221) des Wasserkastens (2,2',2'',2''') in der Seitenwandung (25) angeordnet ist.

12. Wasserkasten nach einem der vorangehenden Ansprüche, **dadurch gekennzeichnet, dass** der kleinste Strömungsquerschnitt (d) in der Luftleitstruktur (3''') im Wesentlichen dem kleinsten Strömungsquerschnitt im Innenraum (23) des Wasserkastens (2'''), bevorzugt im Wesentlichen dem kleinsten Strömungsquerschnitt (e) in einem Raum des Wasserkastens (2''') gebildet aus dem Innenraum (23) und der Luftauslassöffnung (22), entspricht.

13. Wasserkasten nach einem der vorangehenden Ansprüche, **dadurch gekennzeichnet, dass** die Bodenwandung (24) als konischer Hohlkörper ausgebildet ist.

14. Wasserkasten nach einem der vorangehenden Ansprüche, **dadurch gekennzeichnet, dass** die Luftaustrittsöffnung (32) zur Bodenwandung (24) hin gerichtet ist.

15. Wasserkasten nach einem der vorangehenden Ansprüche, **dadurch gekennzeichnet, dass** die Seitenwandung (25) benachbart, insbesondere unmittelbar benachbart, ist zum wenigstens einen Abschnitt (3',30) der Luftleitstruktur (3,3' ,3" ,3''') welcher im Innenraum (23) angeordnet ist.

16. Kraftfahrzeug (1) umfassend einen Wasserkasten (2,2''') nach einem der vorangehenden Ansprüche.

## Claims

1. Water box (2, 2', 2", 2''') for a motor vehicle (1) which is suited for separating air and water at least partially from each other, including
an inner space (23),
at least one air inlet opening (21) for guiding air into the inner space (23),
at least one air outlet opening (22, 220, 221) for guiding air out of the inner space (23),
a bottom wall (24) and a side wall (25), wherein
the inner space (23) is at least delimited by the bottom wall (24) and the side wall (25),
an air guiding structure (3, 3', 3", 3"') with at least one air entrance opening (31) as well as at least one air exit opening (32), wherein
the air entrance opening (31) and the air exit opening (32) are connected to each other by means of a hollow space (33) formed by the air guiding structure (3, 3', 3", 3"'), wherein
the air entrance opening (31) of the air guiding structure (3, 3', 3", 3"') forms the air inlet opening (21) of the water box (2, 2', 2", 2'''), wherein
at least one portion (3', 30) of the air guiding structure (3, 3', 3", 3''') is arranged in the inner space (23), wherein
the air exit opening (32) is arranged in the inner space (23), wherein
the at least one air exit opening (32) is directed towards the bottom wall (24) and/or towards the side wall (25), wherein
the at least one portion (3', 30) of the air guiding structure (3, 3', 3", 3"') which is arranged in the inner space (23) is arranged essentially completely or completely at a distance from the bottom wall (24) and the side wall (25), wherein
the lowermost edge (35) of the air exit opening (32) of the air guiding structure (3, 3', 3", 3"') is arranged essentially on the same height or below the lowermost edge (28) of the air outlet opening (22, 220, 221) of the water box (2, 2', 2", 2'''), wherein
the side wall (25) comprises an upper rim (26), wherein
the air inlet opening (21) of the water box (2, 2', 2", 2''') is arranged above or within the upper rim (26), and wherein
at least one water outlet opening (29) for guiding water out of the inner space (23) is arranged in the bottom wall (24),
**characterized in that** the air guiding structure (3, 3', 3", 3"') includes at least one tube-shaped line (3, 3''') and/or at least one funnel-shaped line (3', 3").

2. Water box as claimed in claim 1, **characterized in that** the upper rim (26) of the side wall (25) is fixed on the air guiding structure (3').

3. Water box as claimed in claim 1, **characterized in that** the water box (2, 2"') additionally comprises a ceiling wall (27) which is fixed on the upper rim (26) of the side wall (25), wherein the inner space (23) is delimited by the bottom wall (24), the side wall (25) and the ceiling wall (27), wherein the air guiding structure (3, 3"') is fixed on the ceiling wall (27), and wherein the air inlet opening (21) is arranged within or above the ceiling wall (27).

4. Water box as claimed in claim 3, **characterized in that** the air outlet opening (22) of the water box (2, 2''') is arranged in the ceiling wall (27).

5. Water box as claimed in one of the preceding claims, **characterized in that** the water outlet opening (29) is arranged below the air exit opening (32) of the air guiding structure (3, 3', 3", 3''').

6. Water box as claimed in one of the preceding claims, **characterized in that** the water outlet opening (29) and the air exit opening (32) of the air guiding structure (3, 3', 3''') are arranged on a common axis (64).

7. Water box as claimed in one of the preceding claims, **characterized in that** the air exit opening (32) of the air guiding structure (3', 3", 3''') is arranged such relative to the air outlet opening (22, 220, 221) of the water box (2', 2", 2''') that the flow direction of the air in the air exit opening (32) of the air guiding structure (3', 3", 3''') is at an angle (α, β, δ) of 90° to 270°, preferably at an angle (α, β, δ) of 90° to 180°, relative to the flow direction of the air in the air outlet opening (22, 220, 221) of the water box (2', 2", 2''').

8. Water box as claimed in one of the preceding claims, **characterized in that** in the inner space (23) and/or on the air outlet opening (22) at least one filter (9) is arranged, wherein the filter (9) is at least arranged such and comprises an extension such, that the air exiting from the air exit opening (32) of the air guiding structure (3''') has to flow through the filter (9) before the air can flow out of the water box (2''').

9. Water box as claimed in one of the preceding claims, **characterized in that** the water box (2', 2"') comprises a water pre-separating structure (7, 70, 71, 72, 73, 74, 75, 76, 77, 78, 241, 251) for pre-separating water that flows through the hollow space (33) of the air guiding structure (3', 3"') from the hollow space (33) before this water can exit from the air exit opening (32) of the air guiding structure (3', 3"').

10. Water box as claimed in one of the preceding claims, **characterized in that** a water repelling device (8) is arranged in the inner space (23), in order to prevent, that water, in particular surge water and/or drop-shaped water, can flow along the bottom wall (24) and/or the side wall (25) in direction of the air outlet opening (22) of the water box (2').

11. Water box as claimed in one of the preceding claims, **characterized in that** the air outlet opening (22, 220, 221) of the water box (2, 2', 2", 2''') is arranged in the side wall (25).

12. Water box as claimed in one of the preceding claims, **characterized in that** the smallest flow cross-section (d) in the air guiding structure (3''') essentially corresponds to the smallest flow cross-section in the inner space (23) of the water box (2'''), preferably essentially to the smallest flow cross-section (e) in a space of the water box (2''') formed by the inner space (23) and the air outlet opening (22).

13. Water box as claimed in one of the preceding claims, **characterized in that** the bottom wall (24) is designed as a conical hollow body.

14. Water box as claimed in one of the preceding claims, **characterized in that** the air exit opening (32) is directed towards the bottom wall (24).

15. Water box as claimed in one of the preceding claims, **characterized in that** the side wall (25) is arranged near, in particular immediately near, to the at least one portion (3', 30) of the air guiding structure (3, 3', 3", 3"') which is arranged in the inner space (23).

16. Motor vehicle (1) including a water box (2, 2''') as claimed in one of the preceding claims.

## Revendications

1. Réservoir d'eau (2, 2', 2", 2''') pour un véhicule automobile (1) lequel est adapté pour au moins partiellement dissocier l'air et l'eau, comprenant
un espace intérieur (23),
au moins une ouverture d'admission d'air (21) pour conduire de l'air dans l'espace intérieur (23),
au moins une ouverture d'expulsion d'air (22, 220, 221) pour évacuer de l'air hors de l'espace intérieur (23),
une paroi inférieure (24) et une paroi latérale (25), où
l'espace intérieur (23) est au moins délimité par la paroi inférieure (24) ainsi que par la paroi latérale (31),
une structure de guidage d'air (3, 3', 3", 3''') avec au moins une ouverture d'entrée d'air (31) ainsi qu'au moins une ouverture d'entrée de sortie d'air (32), où l'ouverture d'entrée d'air (31) et l'ouverture d'entrée de sortie d'air (32) sont connectées l'une à l'autre au moyen d'une cavité (33) formée par la structure de guidage d'air (3, 3', 3", 3'''), où
l'ouverture d'entrée d'air (31) de la structure de guidage d'air (3, 3', 3", 3''') forme l'ouverture d'admission d'air (21) du réservoir d'eau (2, 2', 2", 2'''),
au moins une section (3', 30) de la structure de guidage d'air (3, 3', 3", 3''') est disposée dans l'espace intérieur (23), où
l'ouverture de sortie d'air (32) est disposée dans l'espace intérieur (23), où l'au moins une ouverture de sortie d'air (32) est orientée vers la paroi inférieure (24) et/ou la paroi latérale (25), où
l'au moins une section (3', 30) de la structure de guidage d'air (3, 3', 3", 3'''), laquelle est disposée dans l'espace intérieur (23), est espacée sensiblement entièrement ou sensiblement entièrement de la paroi inférieure (24) et de la paroi latérale (25), où
le bord le plus inférieur (35) de l'ouverture de sortie d'air (32) de la structure de guidage d'air (3, 3', 3", 3''') est disposé sensiblement à la même hauteur ou en dessous du bord le plus inférieur (28) de l'ouverture d'expulsion d'air (22, 220, 221) du réservoir d'eau (2, 2', 2", 2'''), où
la paroi latérale (25) présente un bord supérieur (26), où
l'ouverture d'admission d'air (21) du réservoir d'eau (2, 2', 2", 2''') est disposée en dessus du ou dans le bord supérieur (26), et où
au moins une ouverture d'expulsion d'eau (29) pour l'évacuation de l'eau hors de l'espace intérieur (23) est disposée dans la paroi inférieure (24),
**caractérisé en ce que** la structure de guidage d'air (3, 3', 3", 3''') comprend au moins une conduite en forme de tube (3', 3''') et/ou au moins une conduite en forme d'entonnoir (3', 3").

2. Le réservoir d'eau selon la revendication 1, **caractérisé en ce que** le bord supérieur (26) de la paroi latérale (25) est fixé à la structure de guidage d'air (3 ').

3. Le réservoir d'eau selon la revendication 1, **caractérisé en ce que** le réservoir d'eau (2, 2"') présente en outre une paroi supérieure (27), laquelle est fixée au bord supérieur (26) de la paroi latérale (25), où l'espace intérieur (23) est délimité par la paroi inférieure (24), la paroi latérale (25) ainsi que par la paroi supérieure (27), où la structure de guidage d'air (3, 3"') est fixée à la paroi supérieure (27) et où 1"entrée d'admission d'air (21) est disposée dans la ou en dessus de la paroi supérieure (27).

4. Le réservoir d'eau selon la revendication 3, **caractérisé en ce que** l'ouverture d'expulsion d'air (22) du réservoir d'eau (2, 2''') est disposée dans la paroi supérieure (27).

5. Le réservoir d'eau selon une des revendications précédentes, **caractérisé en ce que** l'ouverture d'expulsion d'eau (29) est disposée en dessous de l'ouverture de sortie d'air (32) de la structure de guidage d'air (3, 3', 3" , 3''').

6. Le réservoir d'eau selon une des revendications précédentes, **caractérisé en ce que** l'ouverture d'expulsion d'eau (29) ainsi que l'ouverture de sortie d'air (32) de la structure de guidage d'air (3, 3 ', 3''') sont disposées le long d'un axe commun (64).

7. Le réservoir d'eau selon une des revendications précédentes, **caractérisé en ce que** l'ouverture de sortie d'air (32) de la structure de guidage d'air (3 ', 3", 3''') est disposée par rapport à l'ouverture d'expulsion d'air (22, 220, 221) du réservoir d'eau (2', 2", 2''') de sorte que la direction d'écoulement de l'air dans l'ouverture de sortie d'air (32) de la structure de guidage d'air (3', 3", 3''') est dans un angle (α, β, δ) de 90 ° à 270 °, préférablement d'un angle (α, β, δ) de 90 ° à 180 °, par rapport à la direction d'écoulement de l'air dans l'ouverture d'expulsion d'air (22, 220, 221) du réservoir d'eau (2', 2", 2"').

8. Le réservoir d'eau selon une des revendications précédentes, **caractérisé en ce que** au moins un filtre (9) est disposé dans l'espace intérieur (23) et / ou au niveau de l'ouverture d' expulsion d'air (22), où le filtre (9) est disposé au moins de sorte que et présente une telle étendue de sorte que l'air sortant de l'ouverture de sortie d'air (32) de la structure de guidage d'air (3"') doit traverser le filtre (9) avant que l'eau puisse sortir du réservoir d'eau (2"').

9. Le réservoir d'eau selon une des revendications précédentes, **caractérisé en ce que** le réservoir d'eau (2', 2''') présente une structure de pré-séparation d'eau (7, 70, 71, 72, 73, 74, 75, 76, 77, 78, 241, 251) pour la pré-séparation de l'eau traversant la cavité (33) de la structure de guidage d'air (3', 3''') de la cavité (33) avant que cette eau puisse sortir de l'ouverte de sortie d'air (32) de la structure de guidage d'air (3', 3''').

10. Le réservoir d'eau selon l'une des revendications précédentes, **caractérisé en ce que** dans l'espace intérieur (23) un dispositif de rejet d'eau (8) est disposé pour éviter que de l'eau, en particulier de l'eau de projection et / ou de l'eau en gouttelettes, puisse s'écouler le long de la paroi inférieure (24) et / ou de la paroi latérale (25) en direction de l'ouverture d'expulsion d'air (22) du réservoir d'eau (2').

11. Le réservoir d'eau selon une des revendications précédentes, **caractérisé en ce que** l'ouverture d'expulsion d'air (22, 220, 221) du réservoir d'eau (2, 2', 2", 2''') est disposée dans la paroi latérale (25).

12. Le réservoir d'eau selon une des revendications précédentes, **caractérisé en ce que** la section transversale d'écoulement la plus petite (d) dans la structure de guidage d'air (3''') correspond sensiblement à la section transversale d'écoulement la plus petite dans l'espace interne (23) du réservoir d'eau (2'''), préférablement sensiblement à la section transversale d'écoulement la plus petite (e) dans un espace du réservoir d'eau (2''') formé à partir de l'espace intérieur (23) et de l'ouverture d'expulsion d'air (22).

13. Le réservoir d'eau selon une des revendications précédentes, **caractérisé en ce que** la paroi inférieure (24) est formée étant que corps creux de forme conique.

14. Le réservoir d'eau selon une des revendications précédentes, **caractérisé en ce que** l'ouverture de sortie d'air (32) est orientée vers la paroi inférieure (24).

15. Le réservoir d'eau selon une des revendications précédentes, **caractérisé en ce que** la paroi latérale (25) est disposée de manière adjacente, en particulier immédiatement adjacente, à l'au moins une section (3 ', 30) de la structure de guidage d'air (3, 3', 3", 3"'), laquelle est disposée dans l'espace intérieur (23).

16. Un véhicule automobile (1) comprenant un réservoir d'eau (2, 2''') selon une des revendications précédentes.
